(19)

**Europäisches Patentamt**

**European Patent Office**

**Office européen des brevets**

(11) **EP 4 686 964 A1**

(12) **EUROPEAN PATENT APPLICATION**

(43) Date of publication:
04.02.2026 Bulletin 2026/06

(21) Application number: 25192922.0

(22) Date of filing: 30.07.2025

(51) International Patent Classification (IPC):
*G02B 3/14* (2006.01)     *G02B 7/08* (2021.01)
*G02B 13/00* (2006.01)     *G02B 15/04* (2006.01)

(52) Cooperative Patent Classification (CPC):
**G02B 3/14; G02B 7/08; G02B 13/0045;**
**G02B 13/0075; G02B 15/04**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **31.07.2024 US 202418791159**

(71) Applicant: **COGNEX CORPORATION**
**Natick, MA 01760-2059 (US)**

(72) Inventors:
• **FERNANDEZ DORADO, José**
**6291VE Vaals (NL)**
• **NUNNINK, Laurens**
**6369BT Simpelveld (NL)**

(74) Representative: **Openshaw & Co.**
**8 Castle Street**
**Farnham, Surrey GU9 7HR (GB)**

(54) **OPTICAL SYSTEMS WITH ADAPTABLE VIEWING ANGLE CONTROL**

(57)     Optical systems and methods are disclosed. The systems and methods can include two liquid lenses and an aperture positioned between the two liquid lenses along an optical axis of an imaging device, which axis passes through the two liquid lenses. The systems and methods can retrieve liquid lens settings and set desired focal distances to achieve a variety of outcomes. The systems and methods can operate based on geometric arrangements of flexible membranes associated with the liquid lenses. In some cases, a desired focal distance can be used to configure the settings for the liquid lenses. In some cases, the liquid lens settings are tailored for acquisition speeds associated with rapid scanning and decoding of code candidates.

EP 4 686 964 A1

**Description**

CROSS-REFERENCE TO RELATED APPLICATIONS

This application is a continuation-in-part of U.S. Application No. 18/424,316, filed on January 26, 2024, which claims priority to and the benefit of U.S. Provisional Application No. 63/441,525, filed on January 27, 2023, the entire contents of which are each herein incorporated by reference for all purposes.

STATEMENT REGARDING FEDERALLY SPONSORED RESEARCH

Not Applicable.

BACKGROUND

Variable focus lenses generally, and liquid lenses in particular, have improved the ability for lens systems to achieve a wide range of optical properties and to switch between settings in a quick fashion. As a result, a nearly infinite set of optical outcomes can be achieved by combining various variable focus lenses in various arrangements of optics and adjusting the settings of those variable focus lenses appropriately. However, determining precisely which settings for the variable focus lenses are necessary to achieve the desired optical outcomes can be a computationally complex process.

One area where variable focus lenses are deployed with increasing regularity is in cell phone cameras. The computational complexity of pairing variable focus lens settings to desired optical outcomes is not particularly problematic in the context of cell phone cameras, or other cameras where merely acquiring an image is the primary outcome, because: a) when merely acquiring an image, the computing power of a cell phone (or other camera) can be more readily monopolized for image acquisition purposes; and b) a cell phone has enough computing power to perform these computations.

In cases where computational resources are more scarce, such as code reading, lens systems are needed that can take advantage of the abilities of variable focus lenses without overwhelming system computational resources with the determination of variable focus lens settings.

BRIEF SUMMARY

In one aspect, the present disclosure provides an optical system for reading a code at a predefined short distance and a predefined long distance. The code has known size dimensions. The optical system includes an image sensor, a fixed focus lens, a first variable focus lens, a second variable focus lens, and a variable focus lens controller. The image sensor has an optical axis. The fixed focus lens is positioned along the optical axis at a first distance from the image sensor. The first variable focus lens is positioned along the optical axis at a second distance from the image sensor. The second distance is greater than the first distance. The second variable focus lens is positioned along the optical axis at a third distance from the image sensor. The third distance is greater than the second distance. The variable focus lens controller is programmed to selectively control the first variable focus lens and the second variable focus lens to project a short field of view and a long field of view onto the image sensor. The short field of view has a short focal plane located at the predefined short distance and a short viewing angle. The long field of view has a long focal plane located at the predefined long distance and a long viewing angle. The short viewing angle is wider than the long viewing angle.

In another aspect, the present disclosure provides an optical system for reading a code at a predefined short distance and a predefined long distance. The code has known size dimensions. The optical system include an image sensor, a fixed focus lens, a first variable focus lens, a second variable focus lens, a variable focus lens controller, a processor, and a memory. The image sensor has an optical axis. The fixed focus lens is positioned along the optical axis at a first distance from the image sensor. The first variable focus lens is positioned along the optical axis at a second distance from the image sensor. The second distance is greater than the first distance. The second variable focus lens is positioned along the optical axis at a third distance from the image sensor. The third distance is greater than the second distance. The variable focus lens controller is configured to control a first focal length of the first variable focus lens and a second focal length of the second variable focus lens. The processor is configured to communicate signals to the variable focus lens controller. The memory has stored thereon a predefined short first focal length, a predefined long first focal length, a predefined short second focal length, a predefined long second focal length, and instructions that, when executed by the processor, cause the processor to: receive an input specifying the predefined short distance or the predefined long distance; in response to receiving the input specifying the predefined short distance: retrieve from the memory the predefined short first focal length and the predefined short second focal length; and send one or more short signals to the variable focus lens controller specifying the predefined short first focal length and the predefined short second focal length, thereby causing the variable focus lens controller to set a first focal length of the first variable focus lens to the predefined short first focal length and to set a second focal length of the second variable focus lens to the predefined short second focal length; and in response to receiving the input specifying the long distance: retrieve from the memory the predefined long first focal length and the predefined long second focal length; and send one or more long signals to the variable focus lens controller specifying the predefined long first focal length and the predefined long second focal length thereby causing the variable focus lens controller to set the first focal length of the first variable focus lens to the predefined long first focal length and to set the second focal length of the second variable focus lens to the predefined long second focal length. The predefined short first focal length and the predefined short second focal length are selected to project a short field of view onto the image sensor. The short field of view has a short focal plane located at the predefined short distance and a short viewing angle. The predefined long first focal length and the predefined long second focal length are selected to project a long field of view onto the image sensor. The long field of view has a long focal plane located at the predefined long distance and a long viewing angle. The short viewing angle is wider than the long viewing angle.

In yet another aspect, the present disclosure provides the present disclosure provides an optical system for reading a code at a predefined short distance and a predefined long distance. The code has known size dimensions. The optical system include an image sensor, a fixed focus lens, a first variable focus lens, a second variable focus lens, a variable focus lens controller, a processor, and a memory. The image sensor has an optical axis. The fixed focus lens is positioned along the optical axis at a first distance from the image sensor. The first variable focus lens is positioned along the optical axis at a second distance from the image sensor. The second distance is greater than the first distance. The second variable focus lens is positioned along the optical axis at a third distance from the image sensor. The third distance is greater than the second distance. The variable focus lens controller is configured to control a first focal length of the first variable focus lens and a second focal length of the second variable focus lens. The processor is configured to operate in a short distance mode and a long distance mode. Operating in the short distance mode causes the variable focus lens controller to adjust the first focal length to the predefined short first focal length and to adjust the second focal length to the predefined short second focal length, thereby projecting a short field of view onto the image sensor. The short field of view has a short focal plane located at the predefined short distance and a short viewing angle. Operating in the long distance mode causes the variable focus lens controller to adjust the first focal length to the predefined long first focal length and to adjust the second focal length to the predefined long second focal length, thereby projecting a long field of view onto the image sensor. The long field of view has a long focal plane located at the predefined long distance and a long viewing angle. The short viewing angle is wider than the long viewing angle.

In a further aspect, the present disclosure provide an optical system for reading a code at a predefined short distance, a predefined medium distance, and a predefined long distance. The code has known size dimensions. The optical system include an image sensor, a fixed focus lens, a first variable focus lens, a second variable focus lens, and a variable focus lens controller. The image sensor has an optical axis. The fixed focus lens is positioned along the optical axis at a first distance from the image sensor. The first variable focus lens is positioned along the optical axis at a second distance from the image sensor. The second distance is greater than the first distance. The second variable focus lens is positioned along the optical axis at a third distance from the image sensor. The third distance is greater than the second distance. The variable focus lens controller is programmed to selectively control the first variable focus lens and the second variable focus lens to project a short field of view, a medium field of view, and a long field of view onto the image sensor. The short field of view has a short focal plane located at the predefined short distance and a short viewing angle. The medium field of view has a medium focal plane located at the predefined medium distance and a medium viewing angle. The long field of view has a long focal plane located at the predefined long distance and a long viewing angle. The short viewing angle is wider than the medium viewing angle. The medium viewing angle is wider than the long viewing angle.

In another further aspect, the present disclosure provides an optical system for reading a code at a predefined short distance, a predefined medium distance, and a predefined long distance. The code has known size dimensions. The optical system include an image sensor, a fixed focus lens, a first variable focus lens, a second variable focus lens, a variable focus lens controller, a processor, and a memory. The image sensor has an optical axis. The fixed focus lens is positioned along the optical axis at a first distance from the image sensor. The first variable focus lens is positioned along the optical axis at a second distance from the image sensor. The second distance is greater than the first distance. The second variable focus lens is positioned along the optical axis at a third distance from the image sensor. The third distance is greater than the second distance. The variable focus lens controller is configured to control a first focal length of the first variable focus lens and a second focal length of the second variable focus lens. The processor is configured to communicate signals to the variable focus lens controller. The memory has stored thereon a predefined short first focal length, a predefined medium first focal length, a predefined medium second focal length, a predefined long first focal length, a predefined short second focal length, a predefined long second focal length, and instructions that, when executed by the processor, cause the processor to: receive an input specifying the predefined short distance, the predefined medium distance, or the predefined long distance; in response to receiving the input specifying the predefined short distance: retrieve from the memory the predefined short first focal length and the predefined short second focal length; and send one or more short signals to the variable focus lens controller specifying the predefined short first focal length and the predefined short second focal length, thereby causing the variable focus lens controller to set a first focal length of the first

EP 4 686 964 A1

variable focus lens to the predefined short first focal length and to set a second focal length of the second variable focus lens to the predefined short second focal length; in response to receiving the input specifying the predefined medium distance: retrieve from the memory the predefined medium first focal length and the predefined medium second focal length; and send one or more medium signals to the variable focus lens controller specifying the predefined medium first focal length and the predefined medium second focal length, thereby causing the variable focus lens controller to set a first focal length of the first variable focus lens to the predefined medium first focal length and to set a second focal length of the second variable focus lens to the predefined medium second focal length; and in response to receiving the input specifying the long distance: retrieve from the memory the predefined long first focal length and the predefined long second focal length; and send one or more long signals to the variable focus lens controller specifying the predefined long first focal length and the predefined long second focal length thereby causing the variable focus lens controller to set the first focal length of the first variable focus lens to the predefined long first focal length and to set the second focal length of the second variable focus lens to the predefined long second focal length. The predefined short first focal length and the predefined short second focal length are selected to project a short field of view onto the image sensor. The short field of view has a short focal plane located at the predefined short distance and a short viewing angle. The predefined medium first focal length and the predefined medium second focal length are selected to project a medium field of view onto the image sensor. The medium field of view has a medium focal plane located at the predefined medium distance and a medium viewing angle. The predefined long first focal length and the predefined long second focal length are selected to project a long field of view onto the image sensor. The long field of view has a long focal plane located at the predefined long distance and a long viewing angle. The short viewing angle is wider than the medium viewing angle. The medium viewing angle is wider than the long viewing angle.

In yet another aspect, the present disclosure provides an optical system for reading a code at a predefined short distance, a predefined medium distance, and a predefined long distance. The code has known size dimensions. The optical system include an image sensor, a fixed focus lens, a first variable focus lens, a second variable focus lens, a variable focus lens controller, a processor, and a memory. The image sensor has an optical axis. The fixed focus lens is positioned along the optical axis at a first distance from the image sensor. The first variable focus lens is positioned along the optical axis at a second distance from the image sensor. The second distance is greater than the first distance. The second variable focus lens is positioned along the optical axis at a third distance from the image sensor. The third distance is greater than the second distance. The variable focus lens controller is configured to control a first focal length of the first variable focus lens and a second focal length of the second variable focus lens. The processor is configured to operate in a short distance mode, a medium distance mode, and a long distance mode. Operating in the short distance mode causes the variable focus lens controller to adjust the first focal length to the predefined short first focal length and to adjust the second focal length to the predefined short second focal length, thereby projecting a short field of view onto the image sensor. The short field of view has a short focal plane located at the predefined short distance and a short viewing angle. Operating in the medium distance mode causes the variable focus lens controller to adjust the first focal length to the predefined medium first focal length and to adjust the second focal length to the predefined medium second focal length, thereby projecting a medium field of view onto the image sensor. The medium field of view has a medium focal plane located at the predefined medium distance and a medium viewing angle. Operating in the long distance mode causes the variable focus lens controller to adjust the first focal length to the predefined long first focal length and to adjust the second focal length to the predefined long second focal length, thereby projecting a long field of view onto the image sensor. The long field of view has a long focal plane located at the predefined long distance and a long viewing angle. The short viewing angle is wider than the medium viewing angle. The medium viewing angle is wider than the long viewing angle.

In still another aspect, the present disclosure provides a code reading including the optical system as described in any aspect herein.

In another aspect, the present disclosure provide a method of making an optical system for reading a code at a predefined short distance and a predefined long distance. The method includes: a) positioning an image sensor having an optical axis, a fixed focus lens, a first variable focus lens, and a second variable focus lens such that the fixed focus lens is on the optical axis at a first distance from the image sensor, the first variable focus lens is on the optical axis at a second distance from the image sensor, and the second variable focus lens is on the optical axis at a third distance from the image sensor, the second distance is greater than the first distance, the third distance is greater than the second distance, the first variable focus lens and the second variable focus lens in electronic communication with a variable focus lens controller, the variable focus lens controller in electronic communication with a processor, the processor in electronic communication with a memory; b) determining a short first focal length and a short second focal length to provide desired short optical properties for acquiring a first image of the code at the predefined short distance and a long first focal length and a long second focal length to provide desired long optical properties for acquiring a second image of the code at the predefined long distance; and c) storing on the memory a digital representation of the short first focal length, the long first focal length, the short second focal length, and the long second focal length.

In yet another aspect, the present disclosure provides a method of making an optical system for reading a code at a predefined short distance, a predefined medium distance, and a predefined long distance. The method includes: a) positioning an image sensor having an optical axis, a fixed focus lens, a first variable focus lens, and a second variable focus lens such that the fixed focus lens is on the optical axis at a first distance from the image sensor, the first variable focus lens is on the optical axis at a second distance from the image sensor, and the second variable focus lens is on the optical axis at a third distance from the image sensor, the second distance is greater than the first distance, the third distance is greater than the second distance, the first variable focus lens and the second variable focus lens in electronic communication with a variable focus lens controller, the variable focus lens controller in electronic communication with a processor, the processor in electronic communication with a memory; b) determining a short first focal length and a short second focal length to provide desired short optical properties for acquiring a first image of the code at the predefined short distance, a medium first focal length and a medium second focal length to provide desired medium optical properties for acquiring a second image of the code at the predefined medium distance, and a long first focal length and a long second focal length to provide desired long optical properties for acquiring a third image of the code at the predefined long distance; and c) storing on the memory a digital representation of the short first focal length, the medium first focal length, the long first focal length, the short second focal length, the medium second focal length, and the long second focal length.

In another aspect, the present disclosure provides an imaging device. The imaging device includes an image sensor, a rear fixed focus lens group, a first liquid lens, a second liquid lens, an aperture, and a front fixed focus lens group. The rear fixed focus lens group is positioned in front of the image sensor along an optical axis. The first liquid lens is positioned in front of the image sensor along the optical axis. The second liquid lens is positioned in front of the image sensor along the optical axis. The aperture is positioned between the first and second liquid lenses along the optical axis of the imaging device. The optical axis passes through the first and second liquid lenses. The front fixed focus lens group is positioned in front of the image sensor along the optical axis. The rear fixed focus lens group or the front fixed focus lens group includes at least one aspherical lens. The controller restrains the first liquid lens and the second liquid lens to settings where the F# of the imaging device is constant independent of zoom level. The controller simultaneously adjust the zoom level and focus. The controller adjusts the first liquid lens and the second liquid lens to project a zoom-independent area of a focal plane projected onto the image sensor.

In another aspect, the present disclosure provides an imaging device. The imaging device includes an image sensor, a rear fixed focus lens group, a first liquid lens, a second liquid lens, an aperture, a front fixed focus lens group, and a controller. The rear fixed focus lens group is positioned in front of the image sensor along an optical axis of the imaging device. The first liquid lens is positioned in front of the image sensor along the optical axis. The first liquid lens includes a first solid portion and a first flexible membrane. The first solid portion and the first flexible membrane define a first interior space that is filled by a first liquid. The second liquid lens is positioned in front of the image sensor along the optical axis. The second liquid lens includes a second solid portion and a second flexible membrane. The second solid portion and the second flexible membrane define a second interior space that is filled by a second liquid. The aperture is positioned between the first liquid lens and the second liquid lens along the optical axis. The optical axis passes through the first liquid lens and the second liquid lens. The front fixed focus lens group is positioned in front of the image sensor along the optical axis. The controller is operatively coupled to the first liquid lens and the second liquid lens. The controller is configured to: receive a desired focal distance for a symbol candidate for attempted decoding; retrieve from a database or compute focal length settings for the first liquid lens and the second liquid lens that are capable of achieving the desired focal distance; send, using the focal length settings, signals to the first liquid lens and the second liquid lens to cause the first liquid lens and the second liquid lens to be at the desired focal distance. The controller restrains the first liquid lens and the second liquid lens to settings where the F# of the imaging device is constant independent of zoom level. The controller simultaneously adjust the zoom level and focus.

In another aspect, the present disclosure provides an imaging device. The imaging device includes an image sensor, a rear fixed focus lens group, a first liquid lens, a second liquid lens, an aperture, a front fixed focus lens group, and a controller. The rear fixed focus lens group is positioned in front of the image sensor along an optical axis of the imaging device. The first liquid lens is positioned in front of the image sensor along the optical axis. The first liquid lens includes a first solid portion and a first flexible membrane. The first solid portion and the first flexible membrane define a first interior space that is filled by a first liquid. The second liquid lens is positioned in front of the image sensor along the optical axis. The second liquid lens includes a second solid portion and a second flexible membrane. The second solid portion and the second flexible membrane define a second interior space that is filled by a second liquid. The aperture is positioned between the first liquid lens and the second liquid lens along the optical axis. The optical axis passes through the first liquid lens and the second liquid lens. The front fixed focus lens group is positioned in front of the image sensor along the optical axis. The controller is operatively coupled to the first liquid lens and the second liquid lens. The first liquid lens is oriented such that the first flexible membrane faces toward the image sensor. The second liquid lens is oriented such that the second flexible membrane faces toward the image sensor. The image sensor includes an indicia that indicates a preferred operating orientation. The first flexible membrane has a first inflection point positioned further away from the imaging sensor relative to a first neutral position of the first flexible membrane and the second flexible membrane has a second inflection point positioned further away from the imaging sensor relative to a second neutral position of the second flexible membrane when the imaging device is positioned in the preferred operating orientation. The controller restrains the first liquid lens and the second liquid lens to settings where the F# of the imaging device is constant independent of zoom level. The controller simultaneously adjusts the zoom level and focus. The controller adjusts the first liquid lens and the second liquid lens to project a zoom-independent area of a focal plane projected onto the image sensor.

In another aspect, the present disclosure provides an imaging device. The imaging device includes an image sensor, a rear fixed focus lens group, a first liquid lens, a second liquid lens, a front fixed focus lens group, a distance sensor, and a controller. The rear fixed focus lens group is positioned in front of the image sensor along an optical axis of the imaging device. The first liquid lens is positioned in front of the image sensor along the optical axis. The second liquid lens is positioned in front of the image sensor along the optical axis. The front fixed focus lens group is positioned in front of the image sensor along the optical axis. The controller is operatively coupled to the first liquid lens, the second liquid lens, and the distance sensor. The controller is configured to: determine, using the distance sensor, a distance between an object including a symbol candidate and the imaging device; receive a desired focal distance for a symbol candidate for attempted decoding, based on the distance between the object and the imaging device; retrieve from a database or compute focal length settings for the first liquid lens and the second liquid lens that are capable of achieving the desired focal distance; and send, using the focal length settings, signals to the first liquid lens and the second liquid lens to cause the first liquid lens and the second liquid lens to be at the desired focal distance. The controller restrains the first liquid lens and the second liquid lens to settings where the F# of the imaging device is constant independent of zoom level. The controller simultaneously adjusts the zoom level and focus.

In another aspect, the present disclosure provides an imaging device. The imaging device includes an image sensor, a rear fixed focus lens group, a first liquid lens, a second liquid lens, a front fixed focus lens group, and a controller. The rear fixed focus lens group is positioned in front of the image sensor along an optical axis of the imaging device. The first liquid lens is positioned in front of the image sensor along the optical axis. The second liquid lens is positioned in front of the image sensor along the optical axis. The front fixed focus lens group is positioned in front of the image sensor along the optical axis. The controller is operatively coupled to the first liquid lens and the second liquid lens. The image sensor, the rear fixed focus lens group, the first liquid lens, the second liquid lens, and the front fixed focus lens group are positioned in order along the optical axis. The controller is configured to: cause the first liquid lens to be at a first focal length that has an optical power of substantially 0 diopters; and with the first liquid lens at the first focal length, calibrate the imaging device.

In another aspect, a sorting system is disclosed. The sorting system includes an imaging device as described herein, a conveyor, and a distance sensor. The distance sensor is upstream of the imaging device and configured to measure a height of objects traveling down the conveyor.

BRIEF DESCRIPTION OF THE DRAWINGS

FIG. 1 shows a cross-sectional view of an optical system, in accordance with aspects of the present disclosure.
FIG. 2 shows a cross-sectional view of an optical system, in accordance with aspects of the present disclosure.
FIG. 3 shows a handheld code reader, in accordance with aspects of the present disclosure.
FIG. 4 shows a flowchart illustrating a method, in accordance with aspects of the present disclosure.
FIG. 5 shows a flowchart illustrating a method, in accordance with aspects of the present disclosure.
FIG. 6 shows a flowchart illustrating a method, in accordance with aspects of the present disclosure.
FIG. 7 shows a plot of system focal length versus object distance for one aspect of the present disclosure compared with a classical zoom system and a fixed focal length system.
FIG. 8 shows a schematic illustration of an imaging device.
FIG. 9 shows an enlarged schematic view of the variable focus lenses, and the image sensor of the imaging device of FIG. 8.
FIG. 10 shows two images acquired of a symbol using the imaging device of FIG. 8 in a horizontal orientation and a vertical orientation.
FIG. 11 shows results of an aperture of a first size.
FIG. 12 shows results of an aperture of a second size.
FIG. 13 shows the locations of the FOV along the Y field 568 to generate the relative illumination values for different points along the Y-field.
FIG. 14A shows a front view schematic illustration of a sorting system.
FIG. 14B shows a side view schematic illustration of the sorting system of FIG. 14A.
FIG. 15 shows a schematic illustration of the zero diopter distance definition to use as a reference point in the calibration curve.
FIG. 16 shows a flowchart of a process for calibrating an imaging device.
FIG. 17 shows a graph of a calibration curve of the optical power versus the distance from the target.
FIG. 18 shows a flowchart of a process for decoding a symbol of an object.

FIG. 19 is an image of a lens arrangement, including at least one aspherical element.

FIG. 20A shows an optical system, in accordance with a comparative example.

FIG. 20B shows an optical system, in accordance with aspects of the present disclosure.

FIG. 21A shows an optical system, in accordance with aspects of the present disclosure.

FIG. 21B shows a cross-sectional view of an imaging device, in accordance with aspects of the present disclosure.

FIG. 21C shows plan views of an imaging device, in accordance with aspects of the present disclosure.

FIG. 22 is an image of an imaging device having a thermal control mechanism, in accordance with aspects of the present disclosure.

FIG. 23 shows a graph of a sharpness test over time.

FIG. 24 shows a graph comparing focal power drift versus focal power for several imaging devices.

FIG. 25 shows a graph comparing response time versus temperature.

DETAILED DESCRIPTION

Before the present invention is described in further detail, it is to be understood that the invention is not limited to the particular embodiments described. It is also to be understood that the terminology used herein is for the purpose of describing particular embodiments only, and is not intended to be limiting. The scope of the present invention will be limited only by the claims. As used herein, the singular forms "a", "an", and "the" include plural embodiments unless the context clearly dictates otherwise.

It should be apparent to those skilled in the art that many additional modifications beside those already described are possible without departing from the inventive concepts. In interpreting this disclosure, all terms should be interpreted in the broadest possible manner consistent with the context. Variations of the term "comprising", "including", or "having" should be interpreted as referring to elements, components, or steps in a non-exclusive manner, so the referenced elements, components, or steps may be combined with other elements, components, or steps that are not expressly referenced. Embodiments referenced as "comprising", "including", or "having" certain elements are also contemplated as "consisting essentially of" and "consisting of" those elements, unless the context clearly dictates otherwise. It should be appreciated that aspects of the disclosure that are described with respect to a system are applicable to the methods, and vice versa, unless the context explicitly dictates otherwise.

Numeric ranges disclosed herein are inclusive of their endpoints. For example, a numeric range of between 1 and 10 includes the values 1 and 10. When a series of numeric ranges are disclosed for a given value, the present disclosure expressly contemplates ranges including all combinations of the upper and lower bounds of those ranges. For example, a numeric range of between 1 and 10 or between 2 and 9 is intended to include the numeric ranges of between 1 and 9 and between 2 and 10.

As used herein, the terms "component," "system," "device" and the like are intended to refer to either hardware, a combination of hardware and software, software, or software in execution. The word "exemplary" is used herein to mean serving as an example, instance, or illustration. Any aspect or design described herein as "exemplary" is not necessarily to be construed as preferred or advantageous over other aspects or designs.

Furthermore, the disclosed subject matter may be implemented as a system, method, apparatus, or article of manufacture using standard programming and/or engineering techniques and/or programming to produce hardware, firmware, software, or any combination thereof to control an electronic based device to implement aspects detailed herein.

Unless specified or limited otherwise, the terms "connected," and "coupled" and variations thereof are used broadly and encompass both direct and indirect mountings, connections, supports, and couplings. Further, "connected" and "coupled" are not restricted to physical or mechanical connections or couplings. As used herein, unless expressly stated otherwise, "connected" means that one element/feature is directly or indirectly connected to another element/-feature, and not necessarily electrically or mechanically. Likewise, unless expressly stated otherwise, "coupled" means that one element/feature is directly or indirectly coupled to another element/feature, and not necessarily electrically or mechanically.

As used herein, the term "processor" may include one or more processors and memories and/or one or more programmable hardware elements. As used herein, the term "processor" is intended to include any of types of processors, CPUs, microcontrollers, digital signal processors, or other devices capable of executing software instructions.

As used herein, the term "memory" includes a non-volatile medium, e.g., a magnetic media or hard disk, optical storage, or flash memory; a volatile medium, such as system memory, e.g., random access memory (RAM) such as DRAM, SRAM, EDO RAM, RAMBUS RAM, DR DRAM, etc.; or an installation medium, such as software media, e.g., a CD-ROM, or floppy disks, on which programs may be stored and/or data communications may be buffered. The term "memory" may also include other types of memory or combinations thereof.

A "field of view" ("FOV") as used herein shall refer to a three-dimensional space in which an object, that has no obstructions between the object and the image sensor, is visible at the image sensor.

A "two-dimensional field of view" as used herein shall refer to a projection of the field of view onto the image sensor. The two-dimensional field of view can be limited by two factors: 1) the size of the image sensor - if light is projected around the image sensor, that light is outside the two-dimensional field of view; and 2) any apertures located between the image scene and the image sensor - if no light is projected onto pixels at the periphery of the image sensor, then those pixels are outside the two-dimensional field of view.

A "focal plane" as used herein shall refer to a plane that is perpendicular to an optical axis and which is positioned at the focus of the camera along the optical axis.

A "lens" as used herein shall refer to an optic or multiple optics that perform the function of a lens. Examples of lenses include, but are not limited to, lenses, lens objectives, curved mirror pairs, and the like.

A "variable focus lens" as used herein shall refer to an optic or multiple optics that perform the function of a lens, where the optical power of the variable focus lens can be changed in some fashion. Examples of variable focus lenses include, but are not limited to, liquid lenses and the like.

When distances are discussed herein, the distance refers to a distance long an optical path and not an absolute distance between two objects, unless the context clearly dictates otherwise. As an example, if a first object, a point on a reflective surface, and a second object are positioned such as to form an equilateral triangle having sides of a given length, and the optical path runs from the first object to the point on the reflective surface to the second object, then the distance between the first object and the second object is equal to two times the given length.

The present disclosure relates to optical systems and methods of making and using the same. The optical systems can be deployed in a variety of code reading contexts, including a code reader, such as a hand held code reader.

As discussed above, in imaging applications where computational resources are more scarce, such as code reading, optical systems are needed that can take advantage of the abilities of variable focus lenses without overwhelming system computational resources with the determination of variable focus lens settings. As one example, the speed with which an optical system can implement real-time adjustments to parameters (e.g., changing focus, zoom, etc.) is increasingly relevant when imaging moving objects. In a shipping/logistics setting where objects must be efficiently moved via conveyors, for example, packages of varying sizes, with varying labels (e.g., position, size, type), and varying positions with respect to the optical system are often reliant on processed image data. An image of a barcode may be "decoded" to make significant decisions such as where to route the package, package contents, etc. It is appreciated that the quality of the captured image corresponds to the reliability and quality of the resulting data. Potential issues from the optical system (e.g., blurry images, partial barcodes) can impact the broader system, particularly output and efficiency.

Continuing with the shipping/logistics example, there is a common emphasis on conveyor speed, and enabling systems to operate at higher and higher rates of speed. Current conveyor systems can operate in excess of 1.5 m/s (e.g., 2.0 m/s, 2.5 m/s, and higher), often with only a small gap between packages. When considering system operating parameters, a major question involves the speed with which an optical system can consistently capture images of suitable quality. For example, if a large package (i.e., the surface to-be-imaged is relatively close to the imaging device) is immediately preceded on a conveyor by a small package (i.e., the surface to-be-imaged is relatively far from the imaging device), how quickly can the optical system adjust such that suitable quality images are captured for both packages?

The present disclosure provides optical systems and methods capable of high-speed image acquisition across a range of focal distances, while preserving the image resolution commonly associated with slower speeds. In particular, the present disclosures provides an optical system configured to update both the focus and the zoom substantially simultaneously. In contrast, a conventional "zoom lens" updates the zoom and the focus separately, sequentially. By updating the focus and the zoom substantially simultaneously, the optical system can respond quickly to changes within the imaging scene (e.g., as packages are conveyed through the FOV).

As will be described, the present disclosure includes optical systems configured to provide a constant F#. Embodiments of the present disclosure can also include two liquid lenses. Conventional systems involving two liquid lenses are limited in terms of the imager size, which limits the image quality. Additionally, conventional optical systems are reliant on a compensator, which is a mechanical component used to perform fine-tuning. Notably, the present disclosure enables the removal of such a compensator through the use of the described two liquid lens configurations.

Measurement of speed and resolution data during testing, confirming the high-speed capabilities of the described embodiments. In summary, the simultaneous adjustment of the zoom level and focus is shown to occur within 15 - 25 milliseconds. Even at an adjustment speed of 15 milliseconds, the incidence of "no-reads" (i.e., failure to decode an imaged barcode) remained somewhat negligible at 0.015%. Thus, the disclosed systems and methods can still perform adequately even with an adjustment speed of less than 15 milliseconds.

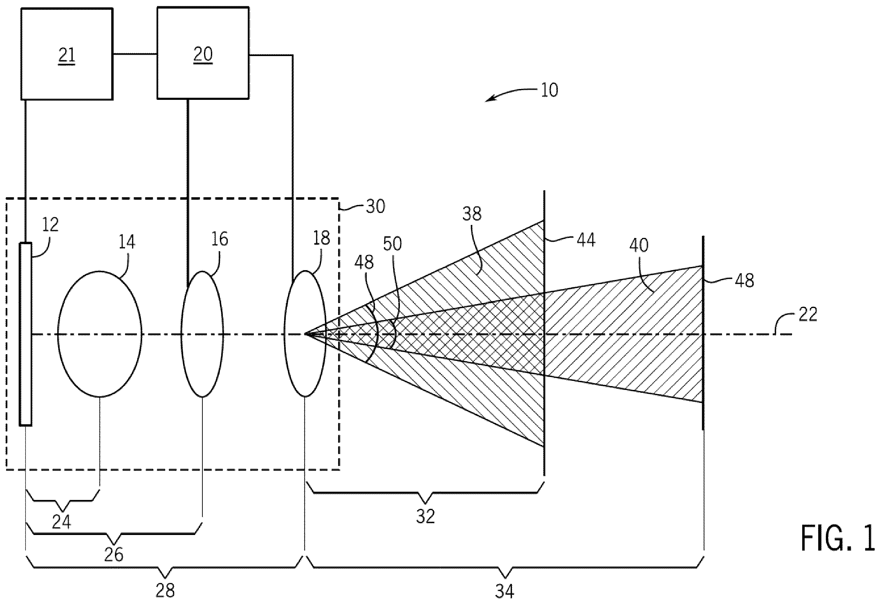

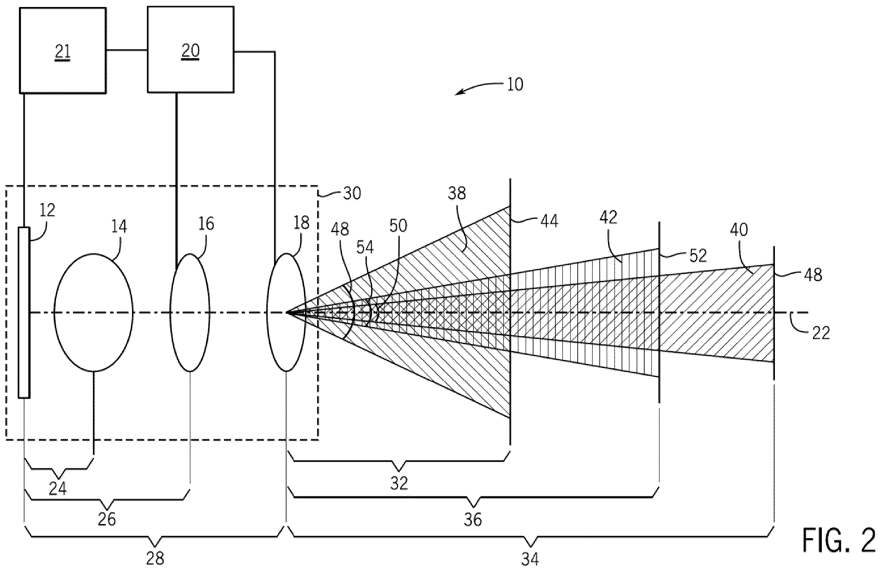

Referring now to Figs. 1 and 2, an optical system 10 includes an image sensor 12, a fixed focus lens 14, a first variable focus lens 16, and a second variable focus lens 18. The optical system 10 can optionally include a housing 30, in which the various components of the optical system 10 can be mounted. Figs. 1 and 2 represent the optical system 10 in a cross-sectional view.

A code can have known size dimensions. In some cases, the code can have known size dimensions including a largest dimension of between 0.1 cm and 50 cm. In some cases, the code can have known size dimensions including a code width of between 0.1 cm and 25 cm and a code length of between 0.1 cm and 25 cm. In certain cases, a one-dimensional code can have a known length of between 0.1 cm and 50 cm. In certain cases, a two-dimensional code can have a known length of between 0.5 cm and 25 cm and/or a known width of between 0.5 cm and 25 cm. In certain cases, the code can have known size dimensions of ~2.5 cm x ~2.5 cm. In certain cases, the code can have known size dimensions of ~7.5 cm x ~7.5 cm.

The optical system 10 can further include a variable focus lens controller 20 in electronic communication with the first variable focus lens 16 and/or the second variable focus lens 18. The variable focus lens controller 20 can be a single controller configured to control the first variable focus lens 16 and the second variable focus lens 18. The variable focus lens controller 20 can be two distinct controllers, each configured to control one of the first variable focus lens 16 and the second variable focus lens 18. The variable focus lens controller 20 can be mounted within the housing 30 (not illustrated) or can be remote from the housing 30. The variable focus lens controller 20 can be a driver circuit configured to receive a small voltage that is representative of a desired variable focus lens focal length and deliver a larger and/or different voltage to a variable focus lens and causes the variable focus lens to be set to the desired variable focus lens focal length.

The optical system 10 can further include a processor 21 in electronic communication with the image sensor 12 and/or the variable focus lens controller 20. The processor 21 can be configured to acquire an image using the image sensor 12. The processor 21 can be mounted within the housing 30 (not illustrated) or can be remote from the housing 30. The processor 21 can be configured to receive an input. In some cases, the input can be a user input. In some cases, the input can be an automatically-generated input. The input can specify a predetermined short distance or a predetermined long distance. In some cases, the input can specify a predetermined short distance, a predetermined medium distance, or a predetermined long distance. The processor 21 can be configured to access a memory (not illustrated) having stored thereon instructions that, when executed by the processor, cause the processor to execute one or more of the steps of any methods described herein, including methods 200, 300.

The image sensor 12 can be an image sensor known to those having ordinary skill in the art. Examples of suitable image sensors include, but are not limited to, a complementary metal-oxide-semiconductor (CMOS) camera sensor, a charge-coupled device (CCD) sensor, an N-type metal-oxide-semiconductor (NMOS) camera sensor, and the like.

The image sensor 12 can be configured to acquire a monochromatic image. The image sensor 12 can be a monochromatic image sensor. In certain cases, the image sensor 12 can be a color image sensor. In cases with a color image sensor, the image sensor 12 can be operable to acquire an image with only a single wavelength of light (i.e., the image sensor 12 can be a color image sensor that is operable to function as a monochromatic image sensor).

The image sensor 12 can define an optical axis 22. The optical axis 22 is perpendicular to the image sensor 12. In some cases, the optical axis 22 emerges from a central point of the image sensor 12.

The fixed focus lens 14, the first variable focus lens 16, and the second variable focus lens 18 can be positioned along the optical axis 22. The fixed focus lens 14 can be positioned at a first distance 24 from the image sensor 12. The first variable focus lens 16 can be positioned at a second distance 26 from the image sensor 12. The second variable focus lens 18 can be positioned at a third distance 28 from the image sensor 12. The third distance 28 is longer than the second distance 26, and both the third distance 28 and the second distance 26 are longer than the first distance 24. These distances can also be defined as the distances between the given optical components, as would be understood by a person having ordinary skill in the art. The fixed focus lens 14 is positioned between the image sensor 12 and the first variable focus lens 16. The first variable focus lens 16 is positioned between the fixed focus lens 14 and the second variable focus lens 18.

The first distance 24, which is the distance between the image sensor 12 and the fixed focus lens 14, can be between 5 mm and 20 mm.

The second distance 26, which is the distance between the image sensor 12 and the first variable focus lens 16, can be between 5 mm and 25 mm.

The third distance 28, which is the distance between the image sensor 12 and the second variable focus lens 18, can be between 10 mm and 40 mm.

The fixed focus lens 14 can be made of materials known to those having ordinary skill in the optical arts to be suitable for use as materials for a lens having properties that do not vary over time. Examples of suitable materials for the fixed focus lens 14 include, but are not limited to, glass, quartz, fluorite, fused silica, plastic, and the like.

The first variable focus lens 16 and/or the second variable focus lens 18 can be a liquid lens. Non-limiting examples of a liquid lens include Liquid Lens Technology by Cognex Corporation headquartered in Natick, MA, a focus tunable lens by Optotune Switzerland AG headquartered in Dietikon, Switzerland, or variable focus liquid lenses by Varioptic headquartered in Lyon, France. The liquid lens (or liquid lenses) can be configured to have adjustable optical power that corresponds to an applied voltage that is provided to the liquid lens.

The first variable focus lens 16 can have an adjustable first focal length. The first focal length can be adjustable between -20 mm and +20 mm, including but not limited to, between -50 mm and +50 mm, or between -100 mm and +100 mm. The optical power of the first variable focus lens 16, defined as the inverse of the focal length (1/f), can be adjusted between -50 to + 50 diopter, including but not limited to -20 to + 20 diopter, or -10 to +10 diopter.

The second variable focus lens 18 can have an adjustable second focal length. The second focal length can be adjustable between -20 mm and +20 mm, including but not limited to, between -50 mm and +50 mm, or between -100 mm and +100 mm. The optical power of the second variable focus lens 18, defined as the inverse of the focal length (1/f), can be adjusted between - 50 to + 50 diopter, including but not limited to -20 to + 20 diopter, or -10 to +10 diopter.

Referring to Fig. 1, the optical system 10 can be configured for acquiring an image of a code at a predefined short distance 32 and a predefined long distance 34. For the purpose of brevity, this configuration will be referred to as a two-distance configuration.

Referring to Fig. 2, the optical system 10 can be configured for acquiring an image of a code at a predefined short distance 32, a predefined medium distance 36, and a predefined long distance 34. For the purpose of brevity, this configuration will be referred to as a three-distance configuration.

The predefined short distance 32, the predefined medium distance 36, and the predefined long distance 34 can be measured from the second variable focus lens 18 or some other fixed point within the optical system 10, such as a front-facing window of a code reader, so long as the distances remain consistently defined for the purposes of the mathematical calculations discussed herein. A person having ordinary skill in the art will appreciate how to compensate for differences in the definitions of these distances.

In the two- and three-distance configuration, the processor and/or the variable focus lens controller can be configured to selectively control the first variable focus lens and the second variable focus lens to project a short field of view 38 onto the image sensor. In the two- and three-distance configuration, the processor and/or the variable focus lens controller can be configured to set the first focal length of the first variable focus lens and the second focal length of the second variable focus lens, thereby projecting a short field of view onto the image sensor. In the two- and three-distance configuration, the processor and/or the variable focus lens controller can be configured to selectively control the first variable focus lens and the second variable focus lens to project a long field of view onto the image sensor. In the two- and three-distance configuration, the processor and/or the variable focus lens controller can be configured to set the first focal length of the first variable focus lens and the second focal length of the second variable focus lens, thereby projecting a long field of view 40 onto the image sensor. In the two- and three-distance configuration, the processor and/or the variable focus lens controller can be configured to operate in a short distance mode and a long distance mode.

In the three-distance configuration, the processor and/or the variable focus lens controller can be configured to selectively control the first variable focus lens and the second variable focus lens to project a medium field of view 42 onto the image sensor. In the three-distance configuration, the processor and/or the variable focus lens controller can be configured to set the first focal length of the first variable focus lens and the second focal length of the second variable focus lens, thereby projecting a medium field of view onto the image sensor. In the three-distance configuration, the processor and/or the variable focus lens controller can be configured to selectively control the first variable focus lens and the second variable focus lens to project a medium field of view onto the image sensor. In the three-distance configuration, the processor and/or the variable focus lens controller can be configured to operate in a medium distance mode.

It should be appreciated that the optical system 10 will be configured to project one field of view onto the image sensor at a given time. Thus, in aspects described as being configured to project multiple different fields of view onto the image sensor, these aspects should be interpreted as being alternately selectable. For example, an optical system 10 having a variable focus lens controller programmed to selectively control the first variable focus lens and the second variable focus lens to project a short field of view and a long field of view onto the image sensor refers to the variable focus lens controller being able to project the short field of view with one pair of functional settings for the first variable focus lens and the second variable focus lens and able to project the long field of view with a different pair of functional settings for the first variable focus lens and the second variable focus lens.

The short field of view 38 includes a short focal plane 44 and a short viewing angle 46.

The long field of view 40 includes a long focal plane 48 and a long viewing angle 50.

The medium field of view 42 includes a medium focal plane 52 and a medium viewing angle 54.

The short field of view 38 can have a wider viewing angle relative to the long field of view 40. The short field of view 38 can have a shorter depth of field relative to the long field of view 40. The short field of view 38 can generate a lower resolution relative to the long field of view 40. The short field of view 38 can have generate a larger aperture relative to the long field of view 40. The short field of view 38 can generate a projection of the code onto the image sensor 12 that is within 10% relative to the long field of view 40.

The short field of view 38 can have a wider viewing angle relative to the medium field of view 42. The short field of view 38 can have a shorter depth of field relative to the medium field of view 42. The short field of view 38 can generate a lower resolution relative to the medium field of view 42. The short field of view 38 can have generate a larger aperture relative to the medium field of view 42. The short field of view 38 can generate a projection of the code onto the image sensor 12 that is within 10% relative to the medium field of view 42.

The medium field of view 42 can have a wider viewing angle relative to the long field of view 40. The medium field of view 42 can have a shorter depth of field relative to the long field of view 40. The medium field of view 42 can generate a lower resolution relative to the long field of view 40. The medium field of view 42 can have generate a larger aperture relative to the long field of view 40. The medium field of view 42 can generate a projection of the code onto the image sensor 12 that is within 10% relative to the long field of view 40.

In the two-distance configuration, the processor 21 and/or the variable focus lens controller 20 can be configured to prevent the first focal length from being adjusted to a value that is outside a range defined by the focal length values between the predefined short first focal length minus 25 mm, 10 mm, 5 mm, or 1 mm and the predefined short first focal length plus 25 mm, 10 mm, 5 mm, or 1 mm and between the predefined long first focal length minus 25 mm, 10 mm, 5 mm, or 1 mm and the predefined long first focal length plus 25 mm, 10 mm, 5 mm, or 1 mm. In the two-distance configuration, the processor 21 and/or the variable focus lens controller 20 can be configured to prevent the second focal length from being adjusted to a value that is outside a range defined by the focal length values between the predefined short second focal length minus 25 mm, 10 mm, 5 mm, or 1 mm and the predefined short second focal length plus 25 mm, 10 mm, 5 mm, or 1 mm and between the predefined long second focal length minus 25 mm, 10 mm, 5 mm, or 1 mm and the predefined long second focal length plus 25 mm, 10 mm, 5 mm, or 1 mm.

In the two-distance configuration, the processor 21 and/or the variable focus lens controller 20 can be configured to prevent the first optical power from being adjusted to a value that is outside a range defined the predefined short first optical power plus or minus 0.1 diopter, 0.2 diopter, 0.5 diopter, or 1.0 diopter and the range defined by the predefined long first optical power plus or minus 0.1 diopter, 0.2 diopter, 0.5 diopter, or 1 diopter. In the two-distance configuration, the processor 21 and/or the variable focus lens controller 20 can be configured to prevent the second optical power from being adjusted to a value that is outside a range defined the predefined short second optical power plus or minus 0.1 diopter, 0.2 diopter, 0.5 diopter, or 1 diopter and the range defined by the predefined long second optical power plus or minus 0.1 diopter, 0.2 diopter, 0.5 diopter, or 1 diopter.

In the three-distance configuration, the processor 21 and/or the variable focus lens controller 20 can be configured to prevent the first optical power from being adjusted to a value that is outside a range defined the predefined short first optical power plus or minus 0.1 diopter, 0.2 diopter, 0.5 diopter, or 1 diopter and the range defined by the predefined medium first optical power plus or minus 0.1 diopter, 0.2 diopter, 0.5 diopter, or 1 diopter and the range defined by the predefined long first optical power plus or minus 0.1 diopter, 0.2 diopter, 0.5 diopter, or 1 diopter. In the three-distance configuration, the processor 21 and/or the variable focus lens controller 20 can be configured to prevent the second optical power from being adjusted to a value that is outside a range defined the predefined short second optical power plus or minus 0.1 diopter, 0.2 diopter, 0.5 diopter, or 1 diopter and the range defined by the predefined medium second optical power plus or minus 0.1 diopter, 0.2 diopter, 0.5 diopter, or 1 diopter and the range defined by the predefined long second optical power plus or minus 0.1 diopter, 0.2 diopter, 0.5 diopter, or 1 diopter.

In the three-distance configuration, the processor 21 and/or the variable focus lens controller 20 can be configured to prevent the first focal length from being adjusted to a value that is outside a range defined by the focal length values between the predefined short first focal length minus 25 mm, 10 mm, 5 mm, or 1 mm and the predefined short first focal length plus 25 mm, 10 mm, 5 mm, or 1 mm, between the predefined medium first focal length minus 25 mm, 10 mm, 5 mm, or 1 mm and the predefined medium first focal length plus 25 mm, 10 mm, 5 mm, or 1 mm, and between the predefined long first focal length minus 25 mm, 10 mm, 5 mm, or 1 mm and the predefined long first focal length plus 25 mm, 10 mm, 5 mm, or 1 mm. In the three-distance configuration, the processor 21 and/or the variable focus lens controller 20 can be configured to prevent the second focal length from being adjusted to a value that is outside a range defined by the focal length values between the predefined short second focal length minus 25 mm, 10 mm, 5 mm, or 1 mm and the predefined short second focal length plus 25 mm, 10 mm, 5 mm, or 1 mm, between the predefined medium second focal length minus 25 mm, 10 mm, 5 mm, or 1 mm and the predefined medium second focal length plus 25 mm, 10 mm, 5 mm, or 1 mm, and between the predefined long second focal length minus 25 mm, 10 mm, 5 mm, or 1 mm and the predefined long second focal length plus 25 mm, 10 mm, 5 mm, or 1 mm.

The processor 21 can be configured to fine tune the first focal length and/or the second focal length. This fine tuning can involve acquiring an image using the processor 21 and the image sensor 12. The processor 21 can be configured to fine tune the first focal length and the second focal length within the focal length ranges or optical power ranges described in the four immediately preceding paragraphs. The processor 21 can be configured to fine tune the first focal length and the second focal length by an amount of less than 25 mm, less than 10 mm, less than 5 mm, or less than 1 mm. The image can then be analyzed for one or more desired performance characteristics, including but not limited to, sharpness, brightness, illumination, distance measurements, combinations thereof, and the like.

While the optical system 10 is illustrated in a linear fashion, it should be appreciated that the optical system 10 can include various reflective configurations without departing from the spirit of the disclosure. The optical system 10 can include additional optics that are suitable for use with the present disclosure, including but not limited to, additional lenses that do not impact the described function of the optical system 10, filters, apertures, shutters, polarizers, mirrors, waveplates, prisms, combinations thereof, and the like.

Optics in the optical system 10, including the fixed focus lens 14, the first variable focus lens 16, and the second variable focus lens 18 can include various coatings, such as antireflection coatings, filter coatings (i.e., a coating that optically filters out certain wavelengths, such as ultraviolet light), anti-lens flare coatings, infrared, short band pass filter, BBAR, combinations thereof, and the like.

It should be appreciated that other types of variable focus lenses are contemplated without departing from the scope of the present disclosure, including liquid lenses that have optical power adjusted by way of changes in fluid pressure provided by a high speed pump, and the like.

In certain aspects, the variable focus lens controller 20 can be a driver circuit that is configured to provide a known voltage to the first variable focus lens 16 and/or the second variable focus lens 18 can be a liquid lens. In certain cases, the variable focus lens controller 20 can have firmware that restricts control of the first variable focus lens 16 and the second variable focus lens 18 to the specific settings described herein (i.e., settings for a predefined short distance, a predefined long distance, and optionally a predefined medium distance) and prevents the variable focus lens controller 20 from accessing other settings and subsequent different optical outcomes.

In certain cases, the optical system 10 can include a processor 21 that is separate and distinct from the variable focus lens controller 20. In these separate and distinct cases, the processor 21 can be located proximate the variable focus lens controller 20 or remote from the variable focus lens controller 20. In certain cases, the optical system 10 can include a processor 21 that is integrated with the variable focus lens controller 20.

In certain cases, the optical system 10 described herein can be specialized in its programming to be particularly useful at capturing images of a code of a given size at two distances, a short distance and a long distance. When designing the optical system 10 for the given code size and the two given distances, pairs of optical powers for the first variable focus lens 16 and the second variable focus lens 18 are calculated, which each correspond to different viewing angles and working distances (i.e., the short distance and the long distance). The following equations can be used for these calculations:

$$f_2' = \frac{a_2' \left( \frac{f_1' a_1}{f_1' + a_1} - e \right)}{\frac{f_1' a_1}{f_1' + a_1} - e - a_2'} \quad ; \text{ and} \tag{1}$$

$$f_2' = \frac{f_T'(f_1' - e)}{f_1' - f_T'} \quad , \tag{2}$$

where $f_1'$ is the focal length of the first variable focus lens 16, $f_2'$ is the focal length of the second variable focus lens 18, $f_T'$ is the focal length of the entire optical system 10, $e$ is the distance between the first variable focus lens 16 and the second variable focus lens 18 (i.e., the third distance minus the second distance), $a_1$ is the distance from the second variable focus lens 18 to the object (i.e., the code), and $a_2'$ is the back focal length (i.e., the distance from the image sensor 12 to the fixed focus lens 14).

Equations (1) and (2) can be solved for both the short and long distances (i.e., the two anticipated distances between the second variable focus lens 18 and the code for a given code reading application). This solving of the equations can take into account any constraints on optical power for the variable focus lenses 16, 18. A discrete pair (or set) of working distances can be calculated with magnification and field of view being optimized for a given usage.

In certain cases, the optical power of both variable focus lenses 16, 18 can be adjusted to achieve a certain magnification at a certain object distance. In certain aspects, the lens can be designed to provide a small field of view at the large distance (or a small viewing angle) and/or a large field of view at the short distance (or a wide viewing angle).

As one exemplary calculation, assuming a system that has a distance between the two variable focus lenses 16 of 24 mm, a back focal length of 20 mm, a short object distance of 100 mm, and a long object distance of 10,000 mm, the focal length settings shown in Table 1 are computed. The settings in Table 1 provide a large viewing angle at the short object distance and a higher resolution at the long object distance.

**Table 1**

| Short distances | | Long distances | |
|---|---|---|---|
| Object distance (a1) | 100 mm | Object distance (a1) | 10,000 mm |

(continued)

| Short distances | | Long distances | |
|---|---|---|---|
| Focal value of the whole system ( $f'_T$ ) | 16mm | Focal value of the whole system ( $f'_T$ ) | 24 mm |
| focal length of the first variable focus lens | -220 mm | focal length of the first variable focus lens | 120 mm |
| focal length of the second variable focus lens | 70 mm | focal length of the second variable focus lens | -100 mm |

It should be appreciated that the exemplary calculations described above are not the only way to compute the pairs of optical powers and the calculations are not intended to be limiting.

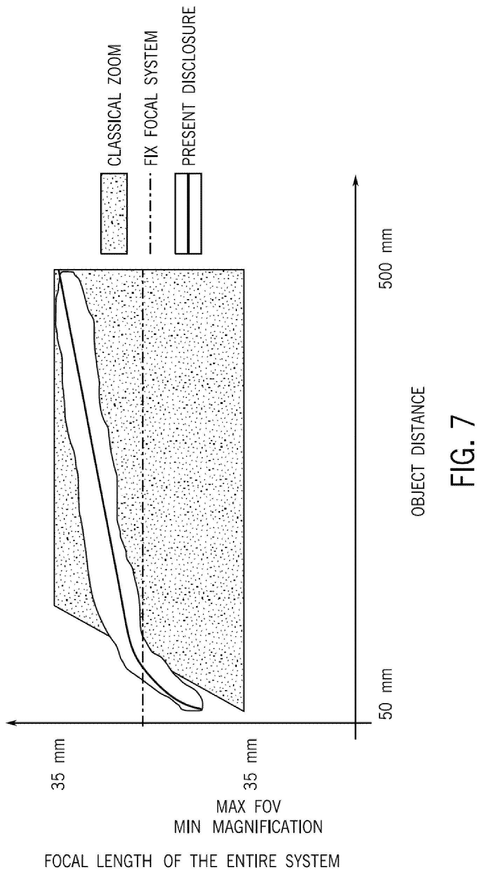

In certain cases, the system 10 can be configured to provide focal lengths and fields of view at a continuous plurality of distances. Referring to Fig. 7, the plot denoted as "Present Disclosure" represents one aspect of the present disclosure. As this plot illustrates, the focal length of the system 10 increases in a non-linear fashion as the object distance (i.e., the focal plane) increases. By way of comparison, a classical zoom lens system is denoted as "Classical zoom" in Fig. 7. These classical zoom lenses can utilize a much broader range of focal length values at a given distance, but cannot achieve the focal lengths, fields of view, or magnification levels of this aspect of the present disclosure at shorter object distances. By way of another comparison, a fixed focus system is denoted as "Fix focal system" in Fig. 7. These fixed focus systems utilize a single focal length value for the system, regardless of the object distance, and cannot achieve the focal lengths, fields of view, or magnification levels of this aspect of the present disclosure at most distances. It should be appreciated that in this aspect, the system is not linear and some variations in the focal length can be achieved at given different object distances in order to acquire a sharper focus, hence the illustration of a surface rather than a simple line. In addition, it should be appreciated that a system can utilize just two, three, four, or more discrete points from the plot in Fig. 7.

In certain cases, the processor 21 and/or the variable focus lens controller 20 can be configured to prevent the variable focus lenses 16, 18 from having their focal length set to any values other than the predefined short focal length and predefined long focal length values (and optionally, the predefined medium focal length values).

The processor 21 can have stored thereon instructions that, when executed by the processor, cause the processor to execute any of the methods of using the optical system that are described herein.

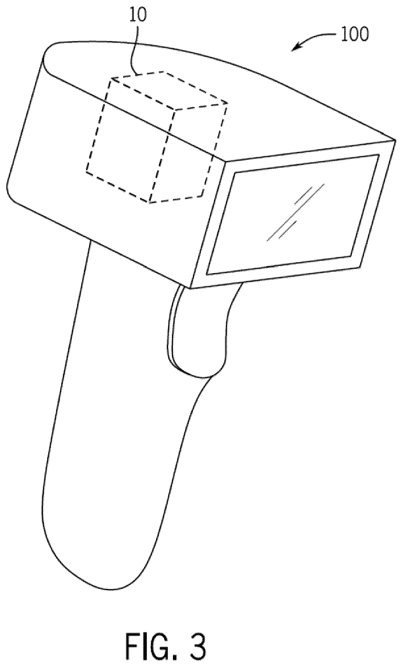

Referring to Fig. 3, this disclosure provides a code reader 100 that includes the optical system 10 as described in any aspect herein. The code reader 100 can be a hand held code reader. The hand held code reader can include the optical system 10 described herein.

The optical system 10 and code reader 100 described herein can include features described in the methods 200, 300, 400 described below, unless the context clearly dictates otherwise.

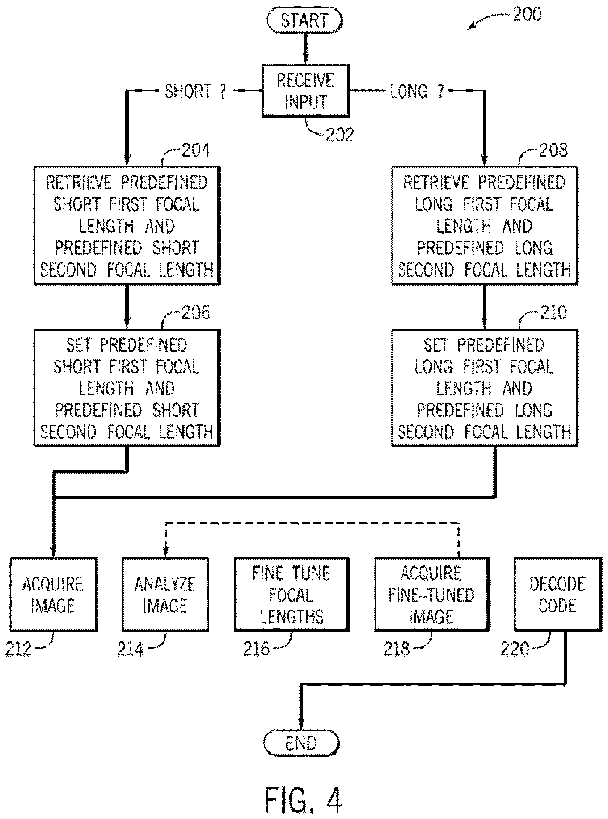

Referring to Fig. 4, this disclosure provides a method 200 of using an optical system 10 for reading a code at a predefined short distance or a predefined long distance. At process block 202, the method 200 includes receiving an input specifying the predefined short distance or the predefined long distance. If the input specifies the predefined short distance, the method 200 proceeds to process block 204. If the input specifies the predefined long distance, the method 200 proceeds to process block 208. At process block 204, in response to receiving the input specifying the predefined short distance, the method 200 includes retrieving from the memory a predefined short first focal length and a predefined short second focal length. At process block 206, the method 200 includes setting a first focal length of the first variable focus lens to the predefined short first focal length and setting a second focal length of the second variable focus lens to the predefined short second focal length. At process block 208, in response to receiving the input specifying the predefined long distance, the method 200 includes retrieving from the memory a predefined long first focal length and a predefined long second focal length. At process block 210, the method 200 includes setting the first focal length of the first variable focus lens to the predefined long first focal length and setting the second focal length of the second variable focus lens to the predefined long second focal length.

At process block 212, the method 200 includes acquiring an image with the optical system. At optional process block 214, the method 200 can include analyzing the image to determine if the image is of sufficient quality for decoding the code. At optional process block 216, the method 200 can include fine tuning the first focal length and/or the second focal length based on the analysis of process block 214. The fine tuning of process block 216 includes the fine tuning described elsewhere herein. At optional process block 218, the method can include acquiring a fine-tuned image. Process blocks 214, 216, and 218 can be repeated as necessary to provide an image of sufficient quality for decoding the code. At process block 220, the method 200 can include decoding the code in either the image or the fine-tuned image.

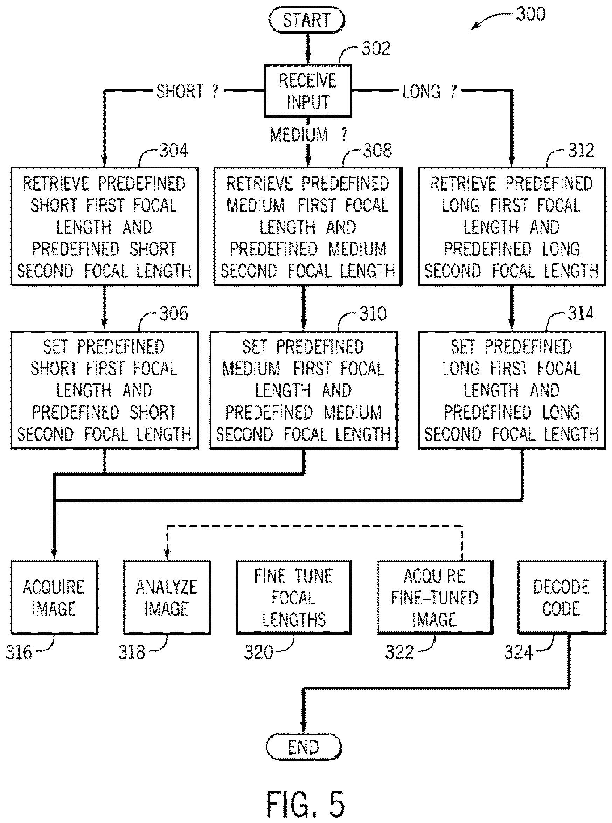

Referring to Fig. 5, this disclosure provides a method 300 of using an optical system 10 for reading a code at a predefined short distance, a predefined medium distance, or a predefined long distance. At process block 302, the method 300 includes receiving an input specifying the predefined short distance, the predefined medium distance, or the predefined long distance. At process block 302, the method 300 includes receiving an input specifying the predefined short distance, the predefined medium distance, or the predefined long distance. If the input specifies the predefined short distance, the method 300 proceeds to process block 304. If the input specifies the predefined medium distance, the method 300 proceeds to process block 308. If the input specifies the predefined long distance, the method 300 proceeds to process block 312. At process block 304, in response to receiving the input specifying the predefined short distance, the method 300 includes retrieving from the memory a predefined short first focal length and a predefined short second focal length. At process block 306, the method 300 includes setting a first focal length of the first variable focus lens to the predefined short first focal length and setting a second focal length of the second variable focus lens to the predefined short second focal length. At process block 308, in response to receiving the input specifying the predefined medium distance, the method 300 includes retrieving from the memory a predefined medium first focal length and a predefined medium second focal length. At process block 310, the method 300 includes setting the first focal length of the first variable focus lens to the predefined medium first focal length and setting the second focal length of the second variable focus lens to the predefined medium second focal length. At process block 312, in response to receiving the input specifying the predefined long distance, the method 300 includes retrieving from the memory a predefined long first focal length and a predefined long second focal length. At process block 314, the method 300 includes setting the first focal length of the first variable focus lens to the predefined long first focal length and setting the second focal length of the second variable focus lens to the predefined long second focal length.

At process block 316, the method 300 includes acquiring an image with the optical system. At optional process block 318, the method 300 can include analyzing the image to determine if the image is of sufficient quality for decoding the code. At optional process block 320, the method 300 can include fine tuning the first focal length and/or the second focal length based on the analysis of process block 318. The fine tuning of process block 320 includes the fine tuning described elsewhere herein. At optional process block 322, the method can include acquiring a fine-tuned image. Process blocks 318, 320, and 322 can be repeated as necessary to provide an image of sufficient quality for decoding the code. At process block 324, the method 300 can include decoding the code in either the image or the fine-tuned image.

Receiving the input of process blocks 202 and 302 can be achieved in a variety of ways. In some cases, receiving the input can include a user providing a manual input defining the desired predefined distance and the manual input can be electronically communicated to the processor. In some cases, the input can be automatically provided as a result of monitoring a property of the optical system, or optionally a code reader or handheld code reader. In some cases, the property of the optical system can include the orientation of the optical system. In some cases, a distance to the code can be measured, for example by using a laser range-finder or other known distance measuring technique, and the input can be deduced from the distance to the code.

The setting of the focal lengths of process blocks 206, 210, 306, 310, and 314 can be achieved in a variety of ways. In some cases, the processor can communicate directly with the first variable focus lens and the second variable focus lens to set the respective focal lengths. In some cases, the processor can send one or more signals (in the case of a predefined short distance, the one or more signals can be one or more short signals, in the case of a predefined medium distance, the one or more signals can be one or more medium signals, and in the case of a predefined long distance, the one or more signals can be one or more long signals) to the variable focus lens controller, which subsequently communicates with the first variable focus lens and the second variable focus lens to set the respective focal lengths. In some cases, the setting of the focal lengths can be achieved by methods known to those having ordinary skill in the electronic communications arts.

In methods 200, 300, the predefined short first focal length and the predefined short second focal length are selected to define the short field of view to have the properties described above. In methods 200, 300, the predefined long first focal length and the predefined long second focal length are selected to define the long field of view to have the properties described above. In method 300, the predefined medium first focal length and the predefined medium second focal length are selected to define the medium field of view to have the properties described above.

The methods 200, 300 can include features described elsewhere herein with respect to the optical system 10, the code reader 100, or the method 400, unless the context clearly dictates otherwise.

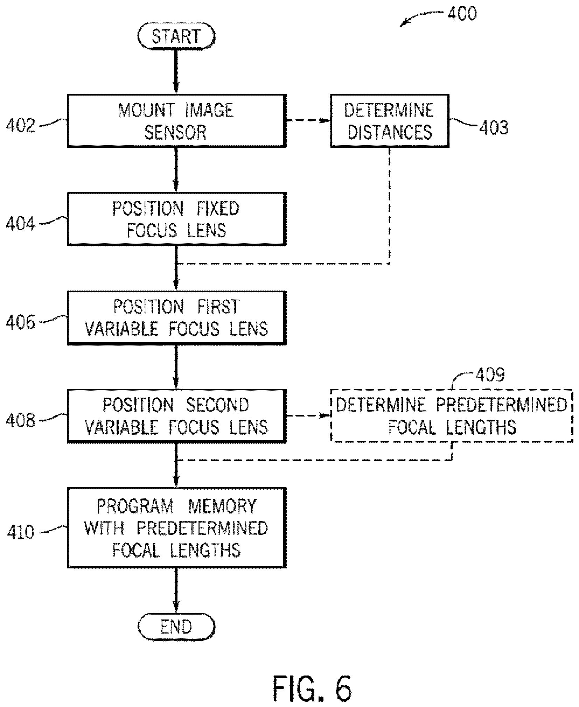

Referring to Fig. 6, this disclosure provides a method 400 of making an optical system 10. At process block 402, the method 400 can include mounting an image sensor having an optical axis. At process block 404, the method 400 can include positioning a fixed focus lens along the optical axis at a first distance from the image sensor. At process block 406, the method 400 can include positioning a first variable focus lens along the optical axis at a second distance from the image sensor. The second distance is greater than the first distance. At process block 408, the method 400 can include positioning a second variable focus lens along the optical axis at a third distance from the image sensor. The third distance can be greater than the second distance. At process block 410, the method can include programming a memory to have stored thereon predetermined focal lengths, such as those described above (i.e., a predetermined short first focal length, predetermined long second focal length, etc.).

At optional process block 409, the method 400 can also optionally include determining the predetermined focal lengths. The determining of optional process block 409 can be achieved as described above.

The method 400 can include features described elsewhere herein with respect to the optical system 10, the code reader 100, or the methods 200, 300, unless the context clearly dictates otherwise.

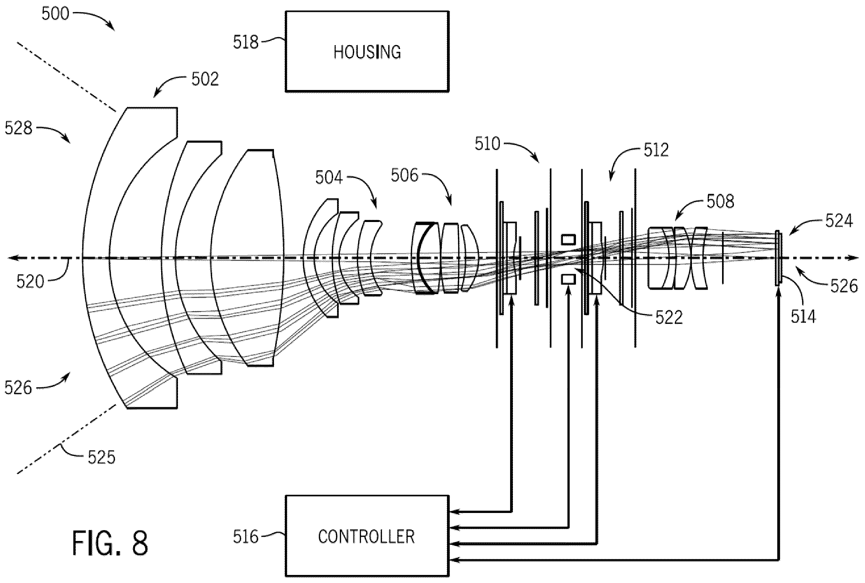

FIG. 8 shows a schematic illustration of an imaging device 500. The imaging device 500 can include groups of lenses 502, 504, 506, 508, variable focus lenses 510, 512, an image sensor 514, a controller 516, and a housing 518. As shown in FIG. 8, the groups of lenses 502, 504, 506 can each be positioned along the optical axis 520 of the imaging device 500 (e.g., the optical axis 520 can intersect each of the groups of lenses 502, 504, 506). In addition, each of the groups of lenses 502, 504, 506 can be positioned in front of the image sensor 514, and in front of the variable focus lenses 510, 512. In some cases, the group of lenses 504 can be positioned between the groups of lenses 502, 506.

In some embodiments, the groups of lenses 502, 504, 506 can have various optical powers and can be formed out of various materials. For example, the group of lenses 502 can collectively have a negative optical power, and each lens of the group of lenses 502 can be formed out of flint (e.g., each negative lens can be formed out of flint). As another example, the group of lenses 504 can collectively have a negative optical power and can also be formed out of flint (e.g., each negative lens can be formed out of flint). As yet another example, some of the lenses of the group of lenses 506 can have a positive optical power, or a negative optical power. In some cases, a lens with a positive optical power can be formed out of glass (e.g., crown glass), whereas a lens with a negative optical power can be formed out of flint. In some cases, the group of lenses 506 can include at least one lens with a positive optical power and at least one lens with a negative optical power.

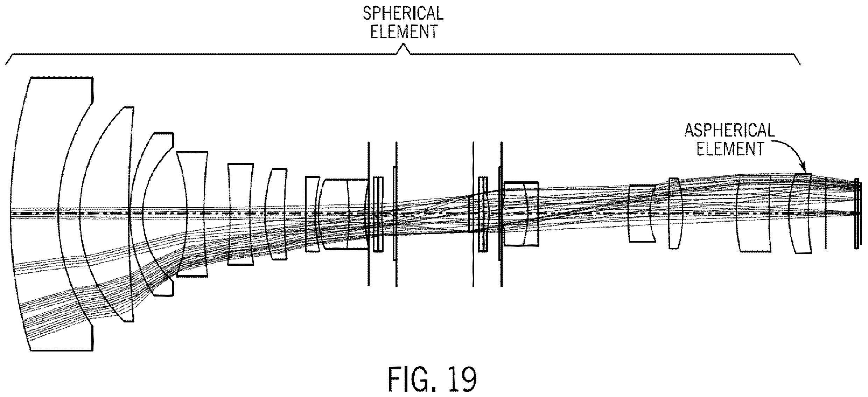

In some embodiments, the group of lenses 502 can be configured to reshape the light angles coming from the object. For example, the groups of lenses 502 can have relatively large curvatures to steer the steep and relatively large angles of the light from the image scene towards the optical axis of the imaging device 500. Thus, in some cases, each lens of the group of lenses 502 can have a larger curvature than each of the lenses of the other group of lenses 504, 506, 508 and the variable focus lenses 510, 512. In some cases, the group of lenses 504, which are positioned behind the group of lenses 502, can facilitate transitioning of the light between the groups of lenses 502, 506. For example, the group of lenses 504 can focus the light already focused by the group of lenses 502 onto the group of lenses 506. Thus, similarly to the group of lenses 502, the group of lenses 504 can also have relatively large curvatures. Accordingly, each lens of the group of lenses 504 can have a curvature that is larger than a curvature of each lens of the groups of lenses 506, 508. In some embodiments, the group of lenses 506 (e.g., which can be positioned behind the group of lenses 504) can be configured to minimize the vignetting effect by distributing the light from the group of lenses 504 so that the light is less saturated at the periphery of the image (e.g., image of the FOV of the imaging device 500). In some embodiments, the optical paths of the light that passes between the groups of lenses 504, 506 can be substantially parallel, which can be advantageous for changing the optical properties of the light that passes along this region (e.g., because the light paths that are parallel are less likely to suffer from undesirable aberrations as compared to more angled optical paths). In this way, the imaging device 500 can include an optical filter between the lens groups 504, 506 (and along the optical axis 520) which can filter the light with less aberrations introduced. In some cases, one lens (e.g., a glass lens or glass element) of one of the groups of lenses 502, 504, 506, 508 can be aspherical. In some cases, a front lens group (e.g., further from the image sensor) includes a lens that is aspherical. In some cases, a rear lens group (e.g., closer to the image sensor) includes a lens that is aspherical. Referring to Fig. 19, one specific lens arrangement is shown where the lens that is nearest to the image sensor is aspherical, while the remaining lens elements are spherical.

In some embodiments, the variable focus lenses 510, 512 can each be positioned in front of the image sensor 514, in front of the group of lenses 508, and behind each of the group of lenses 502, 504, 506. In some cases, the variable focus lens 510 can be positioned farther away from the image sensor 514 than the variable focus lens 512. Each variable focus lens 510, 512 can be a liquid lens as described herein. For example, the liquid lens can include a solid portion and a flexible membrane that defines an interior space filled with a liquid. The liquid lens can also include a pair of electrodes that when electrically excited (e.g., by receiving a voltage) can change the curvature of the flexible membrane. Thus, a computing device (e.g., the controller 516) can cause each of the variable focus lenses 510, 512 (e.g., that are liquid lenses) to change their respective focal length by changing the voltage applied to the electrodes. In some embodiments, the variable focus lenses 510, 512 can be configured to adjust the angle of the FOV of the imaging device 500 relative to the optical axis, and to control the focal point of the entire imaging device 500. In addition, and as described in more detail below, the variable focus lenses 510, 512 can control the F# of the imaging device 500.

As shown in FIG. 8, the imaging device 500 can include an aperture 522 that can be positioned between the variable focus lenses 510, 512 (e.g., along the optical axis 520 so that the optical axis 520 intersects the aperture 522). In some cases, the aperture 522 can be positioned substantially equidistant between the variable focus lenses 510, 512 (e.g., in other words the aperture 522 can be positioned halfway between the variable focus lenses 510, 512). In some embodiments, the aperture 522 can be fixed, while in other cases, the aperture 522 can be variable. For example, when the aperture 522 is fixed, the size of the aperture 522 does not change, however, when the aperture 522 is variable, the size of the aperture 522 can change. In some configurations, including when the aperture 522 is variable, the aperture 522 can be an iris. In some cases, the aperture 522 can be in fixed spatial relationship to the variable focus lenses 510, 512 (and the other lens groups). In this case, the aperture 522 is blocked from translating (e.g., along the optical axis 520).

The aperture 522 can be located at a distance from the variable focus lenses 510, 512 that is tailored to achieve a desired goal, as would be appreciated by a skilled artisan. In some cases, the distance of the aperture 522 from either of the variable focus lenses 510, 512 can be represented as a percentage of an inter-lens distance between the two variable focus lenses 510, 512.

The aperture 522 can be located at a distance from the first variable focus lens 510 (i.e., the variable focus lens closer to the image sensor 514) that is between 1% and 95% of the distance between the first variable focus lens 510 and the second variable focus lens 512, including but not limited to, between 5% and 25%, between 1% and 10%, between 1% and 25%, or between 5% and 29%.

In some cases, it can be preferable that the aperture 522 is positioned more closely to the first variable focus lens 510 than the second variable focus lens, so the distance is between 1% and 49% or the ranged identified above that fall entirely within this range. In such cases, if the aperture 522 is positioned appropriately, the inventors surprisingly discovered that different fields of view can be acquired while retaining a substantially constant F# (see equations below).

In cases where the aperture 522 is movable between positions, the distances that those positions are capable of occupying may be limited to the disclosed ranges.

In cases where the aperture 522 is in a fixed position or is prevented from moving, the aperture 522 is positioned at a single distance selected from one of the disclosed ranges.

In some embodiments, the group of lenses 508, which can be positioned behind the group of lenses 502, 504, 506, and the variable focus lenses 510, 512, can be configured to correct the light from the variable focus lenses 510, 512. For example, the group of lenses 508 adjusts the chief ray angle ("CRA") of the light that is directed at the image sensor 514. In other words, the group of lenses 508 can adjust the ray angle of the light from the variable focus lenses 510, 512 to be closer to the optical axis 520, which can prevent image artefacts. In addition, the group of lenses 508 can control the vignetting effect (as described above), and can control the field curvature minimize aberrations in the image acquired at the image sensor 514 (e.g., by providing some diverging lenses). The group of lenses 508 can include at least one lens with a negative optical power and at least one lens with a positive optical power. The negative optical power lenses can be formed out of flint, and the positive optical power lenses can be formed out of glass (e.g., crown glass).

As shown in FIG. 8, the variable focus lenses 510, 512, the aperture 522, and the image sensor 514 can each be in communication (e.g., bidirectional communication) with the controller 516. In this way, the controller 516 can receive data from each of these components and can transmit instructions to each of these components. For example, the controller 516 can cause the variable focus lenses 510, 512 to each be at a respective focal distance (e.g., by applying a voltage to each respective lens). As another example, the controller 516 can receive imaging data (or an image) from the image sensor 514.

In some embodiments, each component of the imaging device 500 can be coupled to the housing 518. Thus, each component of the imaging device 500 can be in fixed spatial relationship to one another, which can be the configuration shown in FIG. 8, or a different configuration. In some cases, the fixed spatial relationship of the imaging device 500 can be advantageous in that the focal point of the imaging device 500 can be adjusted without any moving components (e.g., with the exception of the membranes of the liquid lenses actually moving). In other words, the imaging device 500, in some configurations, does not include any actuators (e.g., that drive movement of one or more lenses).

In some embodiments, when each variable focus lens 510, 512 is a liquid lens, the liquid lenses can have different curvatures (e.g., one liquid lens having a membrane with a convex curvature and the other liquid lens having a membrane with a concave curvature), or the liquid lenses can have the same curvatures (e.g., with both liquid lenses having a membrane with a concave curvature, or both liquid lenses having a membrane with a convex curvature). Stated a different way, the membranes of the liquid lenses can be inverted relative to one another, or are not inverted relative to one another. In some embodiments, and as described in more detail below, the orientation of the membranes of the liquid lenses can be important, which can mitigate gravitationally induced artifacts.

In some embodiments, the configuration of the variable focus lenses 510, 512 and the aperture 522 can be advantageous. For example, as shown in FIG. 8, light from the FOV 525 follows a first optical path that originates below the optical axis 520, extends upwardly through the optical axis 520, and extends to a first side 524 of the image sensor 514 that is above the optical axis 520. In some cases, the first optical path can originate below the optical axis 520, extend through the group of lenses 502, 504, 506 below the optical axis, extend through the variable focus lens 510, extend through the aperture 522 while intersecting the optical axis 520, extend through the variable focus lens 512, extend through the group of lenses 508 above the optical axis 520, and extend to the first side 524 of the image sensor 514. Correspondingly, light from the FOV 525 follows a second optical path that originates above the optical axis 520, extends downwardly through the optical axis 520, and extends to a second side 526 of the image sensor 514 that is below the optical axis 520. In some cases, the second optical path can originate above the optical axis 520, extend through the group of lenses 502, 504, 506 above the optical axis, extend through the variable focus lens 510, extend through the aperture 522 while intersecting the optical axis 520, extend through the variable focus lens 512, extend through the group of lenses 508 below the optical axis 520, and extend to the second side 524 of the image sensor 514. Stated a different way, opposing portions of the FOV 525 are projected onto opposing sides of the image sensor 514. For example, a lower side 526 of the FOV 525 (e.g., that is below the optical axis 520) is projected onto the first side 524 of the image sensor 514 (e.g., that is above the optical axis 520), and an upper portion 528 of the FOV 525 (e.g., that is above the optical axis 520) is projected onto the second side 526 of the image sensor 514 (e.g., that is below the optical axis 520). In this way, with the portions of the FOV 525 being projected onto different sides of the image sensor 514, the imaging device 500 can provide a better focus for focal planes that are farther away from the image sensor 514.

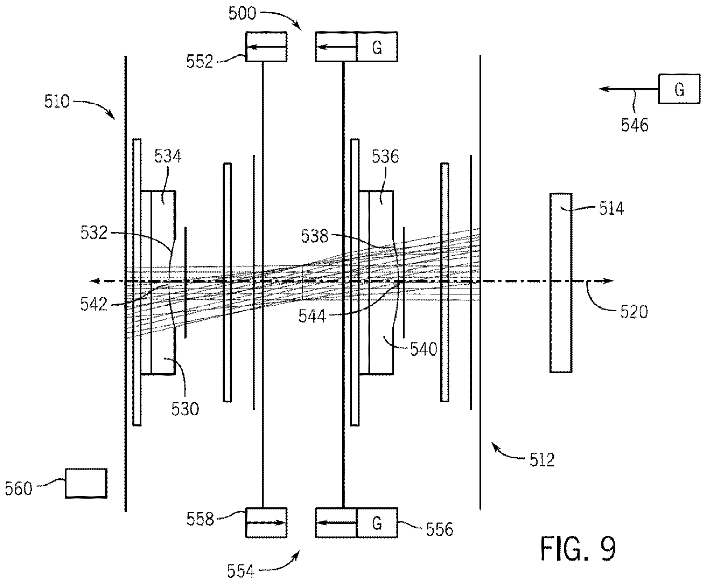

FIG. 9 shows an enlarged schematic view of the variable focus lenses 510, 512, and the image sensor 514. As shown in FIG. 9, the variable focus lens 510 can include a solid portion 530, a membrane 532 positioned within the solid portion 530, and a liquid 534 positioned in an interior space between the solid portion 530 and the membrane 532. Similarly, the variable focus lens 512 can include a solid portion 536, a membrane 538 positioned within the solid portion 536, and a liquid 540 positioned in an interior space between the solid portion 536 and the membrane 538. As shown in FIG. 9, the membrane 532 is in a concave configuration, whereas the membrane 538 is in a convex configuration. For example, an inflection point 542 of the membrane 532 can be positioned farther away from the image sensor 514 than the membrane 532 in a neutral configuration (e.g., with the membrane 532 being substantially flat, planar, etc.). Correspondingly, an inflection point 544 of the membrane 538 can be positioned closer to the image sensor 514 than the membrane 538 in a neutral configuration (e.g., with the membrane 538 being substantially flat, planar, etc.).

While FIG. 9 shows the variable focus lens 510 with a convex curvature (e.g., with a positive optical power) and the variable focus lens 512 with a concave curvature (e.g., with a negative optical power), the variable focus lenses 510, 512 can be adjusted to have different optical powers, focal lengths, etc., by adjusting the curvature of the membranes 532, 544. For example, in some cases, the orientation of the membranes 532, 538 can be the same, which can mitigate undesirable gravitational effects on the membranes 532, 538 which can otherwise decrease image quality by introducing image artifacts. For example, the gravity vector 546 can be oriented in a direction from the image sensor 514 and to the variable focus lenses 510, 512. In some cases, the gravity vector 546 can be substantially parallel to the optical axis 520. In some cases, when a variable focus lens is in a concave configuration (e.g., the variable focus lens 512), such that the inflection point of the membrane of the variable focus lens is closer to the image sensor 514 relative to a neutral configuration of the membrane, the force of the gravity vector can cause the membrane at the inflection point to slightly buckle, which can undesirably introduce image artifacts (e.g., because the membrane is not at a uniform curvature throughout the entire surface of the membrane). In this way, the variable focus lenses 510, 512 can each be configured to be at a convex orientation, so that the inflection point 542 of the membrane 532 is positioned farther away from the image sensor 514 than a neutral position of the membrane 532, and so that the inflection point 544 of the membrane 538 is positioned farther away from the image sensor 514 than a neutral position of the membrane 538. In this configuration, the curvatures of the membranes 532, 538 are aligned with the gravity vector 546 and thus buckling of the membranes 532, 538 is prevented, which could otherwise undesirably introduce imaging artifacts.

In some cases, the two variable focus lenses 510, 512 are liquid lenses and the controller 116 is adapted to provide control where one of the liquid lenses 510, 512 is required to be in a convex orientation, while the other lens is allowed to adopt an orientation that is not constrained to being convex.

In some embodiments, the imaging device 500 can allow the variable focus lenses 510, 512 to only operate with the inflection points 542, 544 of the respective membranes 532, 538 to be farther away from the image sensor 514 relative to a neutral position of the respective membrane 532, 538, when, for example, an inflection point is present in a membrane (e.g., the imaging device 500 can allow the membranes 532, 538 to be in a neutral position, which can include when no voltage is applied to the variable focus lenses 510, 512). In other words, the controller 516 can prevent the variable focus lenses 510, 512 from having the inflection points 542, 544 of the respective membranes 532, 538 to be closer to the image sensor 514 relative to a neutral position of the respective membranes 532, 538, when, for example, an inflection point is present in a membrane. In this way, the imaging device 500 (e.g., the controller 516) can mitigate gravitationally induced artifacts by preventing undesirable configurations of the membranes 532, 538 relative to a gravity vector.

In some embodiments, while the gravity vector 546 has been illustrated as extending from the image sensor 514 to the variable focus lenses 510, 512, the gravity vector 546 can be reversed. In this case, the discussion above for desirable configurations can be reversed. For example, in this opposing configuration, the imaging device 500 can allow the variable focus lenses 510, 512 to only operate with the inflection points 542, 544 of the respective membranes 532, 538 to be closer to the image sensor 514 relative to a neutral position of the respective membrane 532, 538, when, for example, an inflection point is present in a membrane (e.g., the imaging device 500 can allow the membranes 532, 538 to be in a neutral position, which can include when no voltage is applied to the variable focus lenses 510, 512). In other words, the controller 516 can prevent the variable focus lenses 510, 512 from having the inflection points 542, 544 of the respective membranes 532, 538 to be farther away from the image sensor 514 relative to a neutral position of the respective membranes 532, 538, when, for example, an inflection point is present in a membrane. In this way, the imaging device 500 (e.g., the controller 516) can mitigate gravitationally induced artifacts by preventing undesirable configurations of the membranes 532, 538 relative to a gravity vector.

In some embodiments, the imaging device 500 can include an indica 548 that can indicate a preferred orientation of the imaging device 500, which, in this case, can indicate that the gravity vector is aligned with the imaging device 500. The indica 548 can be a visual identifier and can be coupled to an exterior surface of the housing 518 (e.g., so that the indica 548 can be viewed by a user that can install the imaging device 500). The indica 548 can include a gravity indica 550 and an orientation indica 552, which can prompt the user to orient the imaging device 500 so that the gravity indicia 550 is aligned with the actual gravity vector and that the orientation of the imaging device 500 (e.g., a longitudinal axis of the imaging device 500) is aligned with the actual gravity vector. In other words, the indica 548 can indicate that the imaging device 500 should be mounted so that a lens of the imaging device 500 faces away from the actual gravity vector. In some cases, the gravity indica 550 can be a first arrow, and the orientation indica 552 can be a second arrow, with the first arrow being in the same direction as the second arrow. In some configurations, when the imaging device 500 includes the indica 548, the imaging device 500 can allow the variable focus lenses 510, 512 to only operate with the inflection points 542, 544 of the respective membranes 532, 538 to be farther away from the image sensor 514 relative to a neutral position of the respective membrane 532, 538, when, for example, an inflection point is present in a membrane (e.g., the imaging device 500 can allow the membranes 532, 538 to be in a neutral position, which can include when no voltage is applied to the variable focus lenses 510, 512).

In some embodiments, the imaging device 500 can include an indica 554 that can indicate a preferred orientation of the imaging device 500 (e.g., different than the preferred orientation with the indica 548), which, in this case, can indicate that the gravity vector is in an opposite direction to the imaging device 500. The indica 554 can also be a visual identifier and can be coupled to an exterior surface of the housing 518 (e.g., so that the indica 554 can be viewed by a user that can install the imaging device 500). The indica 554 can include a gravity indica 556 and an orientation indica 558, which can prompt the user to orient the imaging device 500 so that the gravity vector 556 is aligned with the actual gravity vector and that the orientation of the imaging device 500 is opposite the actual gravity vector. In other words, the indica 554 can indicate that the imaging device 500 should be mounted so that a lens of the imaging device 500 faces away towards the actual gravity vector. In some cases, the gravity indica 556 can be a first arrow, and the orientation indica 558 can be a second arrow, with the first arrow being in the opposite direction as the second arrow. In some configurations, when the imaging device 500 includes the indica 554, the imaging device 500 can allow the variable focus lenses 510, 512 to only operate with the inflection points 542, 544 of the respective membranes 532, 538 to be closer to the image sensor 514 relative to a neutral position of the respective membrane 532, 538, when, for example, an inflection point is present in a membrane (e.g., the imaging device 500 can allow the membranes 532, 538 to be in a neutral position, which can include when no voltage is applied to the variable focus lenses 510, 512).

In some embodiments, the imaging device 500 can include an orientation sensor 560, which can be coupled to and positioned within the housing 518. The orientation sensor 560 can be implemented in different ways. For example, the orientation sensor 560 can be an accelerometer, a gyroscope, an internal measurement unit, etc. The orientation sensor 560 can sense the orientation of the imaging device 500 relative to the gravity vector 546. In this way, the sensor 560, which can be in communication with the controller 516, can cause the imaging device 500 to operate in different operational modes, based on the orientation of the imaging device 500 relative to the gravity vector 546), which can mitigate undesirable orientations of the variable focus lenses 510, 512 with respect to certain orientations of the imaging device 500. For example, the controller 516 can cause the imaging device 500 to operate according to a first mode of operation or a second mode of operation, based on the orientation of the imaging device 500. In some cases, this can include the controller 516 switching from the first mode of operation to the second mode of operation (or vice versa). In the first mode of operation, the controller 516 can cause variable focus lenses 510, 512 to only have inflection points 542, 544 that are farther away from the imaging sensor 514 relative to a neutral position of the membranes 532, 538, when an inflection point is present. Correspondingly, in the second mode of operation, the controller 516 can cause the variable focus lenses 510, 512 to only have inflection points 542, 544 that are closer to the imaging sensor 514 relative to a neutral position of the membranes 532, 538, when an inflection point is present.

In some embodiments, the particular orientation from the orientation sensor 560 can be used to indicate which mode of operation should be used (e.g., the first mode or the second mode). For example, the controller 516 can receive a first orientation, form the orientation sensor 560, that can indicate that the orientation of the imaging device 500 is in substantially the same direction as the gravity vector 546. Then, the controller 516 can cause the imaging device 500 to operate in the first mode of operation, which can include switching from the second mode of operation to the first mode of operation. As another example, the controller 516 can receive a second orientation, from the orientation sensor 560, that can indicate that the orientation of the imaging device 500 is in a substantially opposite direction as the gravity vector 546. Then, the controller 516 can cause the imaging device 500 to operate in the second mode of operation, which can include switching from the first mode of operation to the second mode of operation. In this way, if, for example, the imaging device 500 is mounted to a different location, the controller 516 can still cause the imaging device 500 to operate in a more ideal configuration, based on the current orientation of the imaging device 500.

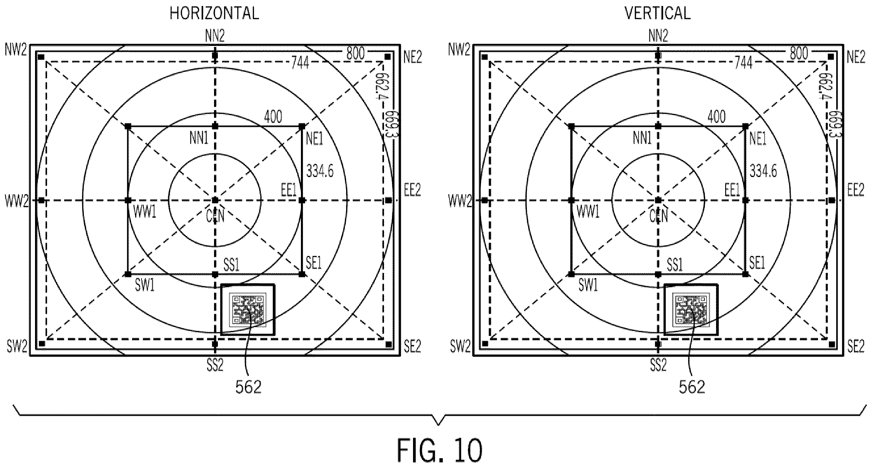

FIG. 10 shows two images acquired of a symbol 562 using the imaging device 500 in a horizontal orientation and a vertical orientation. For example, the left image that includes the symbol 562 was acquired with the imaging device 500 (e.g., with the membranes 532, 538 having opposing curvatures) in a horizontal configuration with respect to gravity (e.g., the gravity vector being perpendicular to a longitudinal axis of the imaging device 500), while the right image that also includes the symbol 562 was acquired with the imaging device 500 (e.g., with the membranes 532, 538 having opposing curvatures) in a vertical configuration (e.g., the gravity vector being parallel to the longitudinal axis of the imaging device 500). As shown in FIG. 10, the term "NW2" in the upper right corner of both images was unable to be deciphered, and the image quality of the symbol 562 in each of the two images is substantially the same. So, in this configuration of the imaging device 500, the horizontal and vertical orientations are similar.

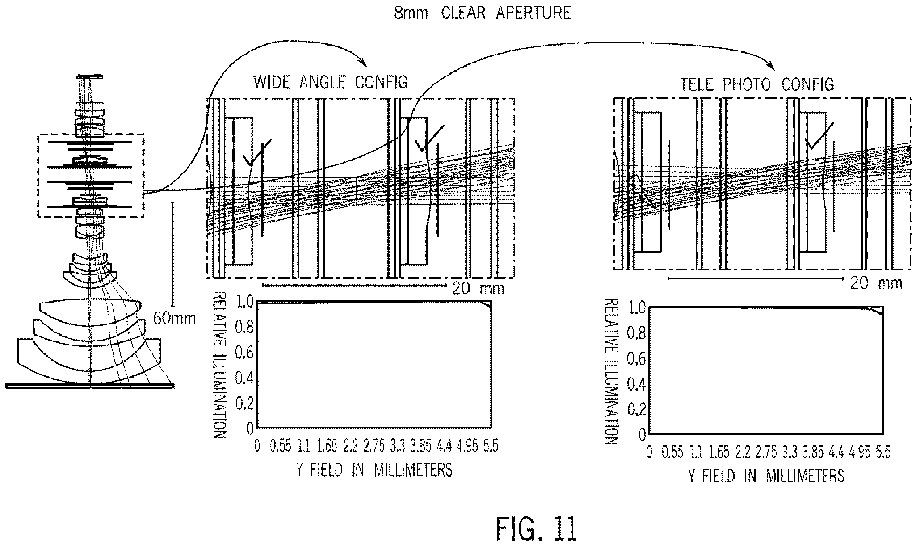

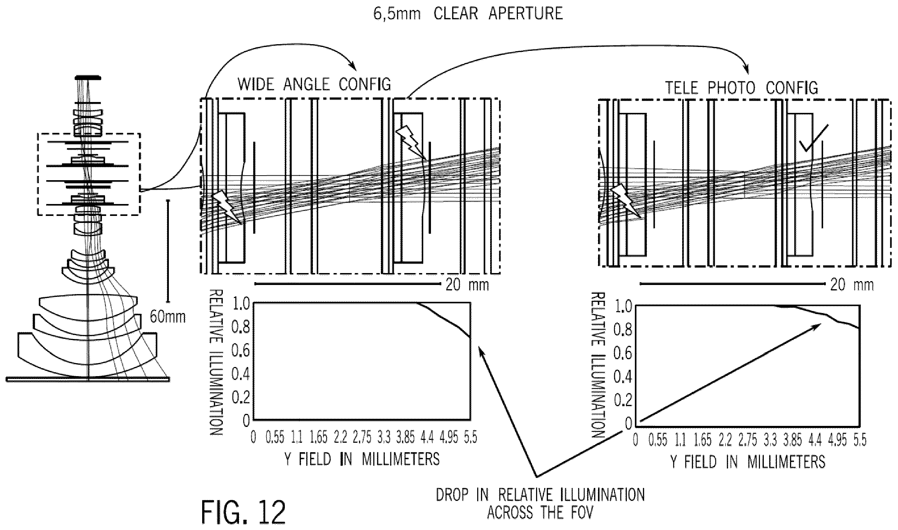

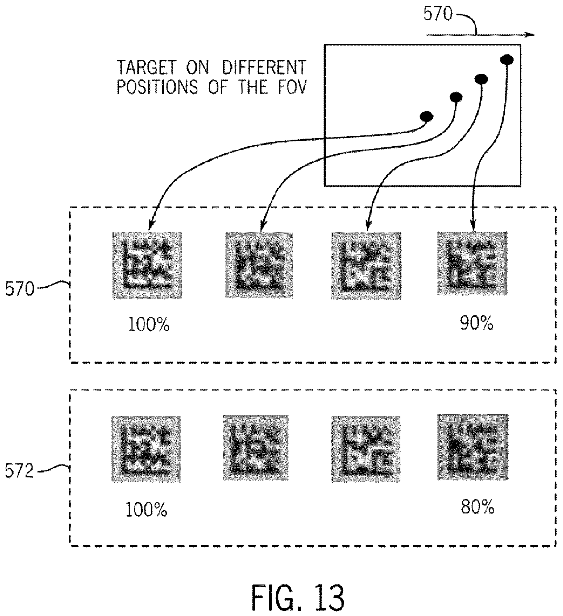

FIGS. 11 and 12 show results between two different sized apertures. For example, FIG. 11 shows an imaging device (e.g., the imaging device 500) with an aperture that is 8 millimeters in width (e.g., the diameter), while FIG. 12 shows an imaging device (e.g., the imaging device 500 with an aperture that is 6.5 millimeters in width (e.g., the diameter). FIG. 11 also shows two graphs of the relative illumination versus the Y field in millimeters (e.g., the y dimension of the FOV, with a 0 Y field being the center of the FOV that intersects with the optical axis of the imaging device) for a wide angle FOV, and a telephoto FOV (e.g., a short angle FOV, which can have a smaller angle than the wide angle FOV). Correspondingly, FIG. 12 also shows two graphs of the relative illumination versus the Y field in millimeters for a wide angle FOV and a telephoto FOV. FIG. 13 shows the locations of the FOV along the Y field 570 to generate the relative illumination values for different points along the Y-field. For example, FIG. 13 shows four images 570 of the symbol 562 acquired using the imaging device with the 8 mm aperture at different locations along the Y-field, and shows four images 572 of the symbol 562 acquired using the imaging device with the 6.5 mm aperture. As shown in FIGS. 11-13, the imaging device with the 6.5 mm aperture has an undesirable drop in relative illumination along the FOV (e.g., near the outer boundary of the FOV). Thus, in some cases, the imaging device (e.g., the imaging device 500) can have an aperture that is greater than 6.5 mm, greater than or equal to 8 mm, etc., which can provide better relative illumination characteristics for the imaging device.

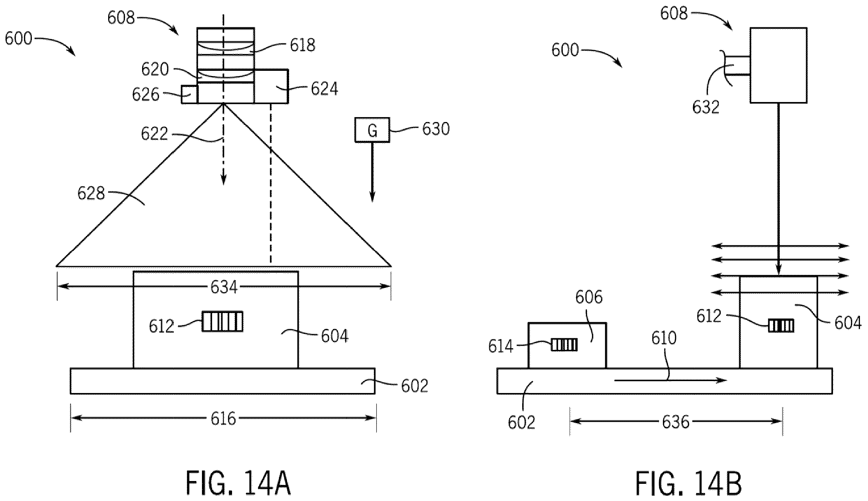

FIG. 14A shows a front view schematic illustration of a sorting system 600, while FIG. 14B shows a side view schematic illustration of the sorting system 600. The sorting system 600 can include a conveyor 602 that can support one or more objects including the objects 604, 606, and an imaging device 608. In some cases, the conveyor 602 can support the object and move objects along the conveyor in a direction of travel (e.g., the direction 610 of FIG. 14B). The conveyor 602 can be implemented in different ways. For example, the conveyor 602 can be a conveyor belt, one or more tracks of rollers (e.g., conveyor rollers), a moving platform, a moving rack, etc. In some embodiments, a width 616 of the conveyor 602 can be greater than or equal to 800 millimeters (e.g., to accommodate larger objects, such as when the objects supported on the conveyor 602 are pallets), can be substantially 800 millimeters, etc. In some embodiments, the conveyor 602 can move in the direction of travel (e.g., the direction 610) at a rate of greater than or equal to 1 meter per second, greater than or equal to 2 meters per second, etc., both of which are considerably faster than point of sale conveyors at a checkout booth of a retail store. Thus, the conveyor 602 can move one or more objects (e.g., the objects 604, 606) along the direction of travel at a speed of greater than or equal to 1 meter per second, at a speed of greater than or equal to 2 meters per second, etc.

As shown in FIG. 14, each object 604, 606 can include a corresponding symbol 612, 614. Each symbol 612, 614 can be scanned by the imaging device 608, and can be implemented in different ways. For example, each symbol 612, 614 can be a barcode, a data matrix, etc., with information encoded therein, an alpha numeric string, a numeric string, etc. While each symbol 612, 614 is illustrated as being on a lateral side of the respective object 604, 606, in other configurations, each symbol 6125, 614 can be positioned on an upper side of the respective object 604, 606 (e.g., opposite to the side of the object in contact with the conveyor 602). In some configurations, as the objects 604, 606 travel along the conveyor 602 (e.g., in the direction 610), the imaging device 608 can scan the objects 604, 606 to obtain symbol information from the respective symbols 612, 614. For example, as the object 606 travels by the imaging device 608, the imaging device 608 can acquire an image of the symbol 612 (e.g., to decode the information encoded by the symbol 612). Correspondingly, as the object 606 travels by the imaging device 608 (e.g., after the object 604 travels past the imaging device 608), the imaging device 608 can acquire an image of the symbol 614 (e.g., to decode the information encoded by the symbol 614).

In some embodiments, each object 604, 606 can be a box, a package, etc. For example, each object 604, 606 can have dimensions that are substantially the same. In particular, two or more of the width, the length, or the base of the object 604 can be the same. In some embodiments, a dimension (a length, a width, a height, etc.) of each object 604, 606 is less than 800 millimeters. For example, when the imaging device 608 is positioned above the conveyor 602, objects that are too tall (e.g. greater than 800 millimeters in height) may be too difficult to acquire an image of a symbol that is of a sufficient quality to decode. In some embodiments, each symbol 612, 614 can have a minimum size. For example, in some cases, a dimension (e.g., a width, a length, etc.) of each symbol 612, 614 can be greater than or equal to 10 millimeters. Thus, in some cases, the dimension of each symbol 612, 614 is not less than 10 millimeters.

In some embodiments, the imaging device 608 can be implemented in a similar manner as the imaging devices, the optical systems, the optical devices, etc., described herein. Thus, the previous descriptions of the imaging devices, the optical systems, the optical devices, etc., described herein pertain to the imaging device 608 (and vice versa). The imaging device 608 can include variable focus lenses 618, 620 positioned along an optical axis 622 of the imaging device 608, a distance sensor 624, and an illumination source 626. In some embodiments, the distance sensor 624 and the illumination source 626 can be coupled to a housing of the imaging device 608 and can be positioned on opposing sides of the housing of the imaging device 608. In other configurations, the illumination source 626 and the distance sensor 624 can be positioned on the same side of the housing of the imaging device 608. In addition, while the distance sensor 624, and the illumination source 626 are illustrated as being part of the imaging device 608, in other configurations the distance sensor 624 and the illumination source 626 can each be separate from the imaging device 608. In this case, the distance sensor 624 and the illumination source 626 can each still be in communication with the imaging device 608 (e.g., including the controller of the imaging device 608).

In some embodiments, the distance sensor 624 and the illumination source 626 can be implemented in different ways. For example, the distance sensor 624 can be a dimensioner, an image sensor, a time of flight ("ToF") sensor, etc. Regardless, however, the distance sensor 624 can be configured to sense a distance between the imaging device 608 and a surface of an object (e.g., an upper surface of the object 604). In this case, the distance sensor 624 can directly sense the distance between the imaging device 608 and the surface of the object (e.g., when the distance sensor 624 is coupled to or otherwise integrated within the imaging device 608), or the distance sensor 624 can indirectly sense the distance between the imaging device 608 and the surface of the object, based on a reference dimension between the distance sensor 624 and the imaging device 608 (e.g., when the distance sensor 624 is separate from the imaging device 608). In some embodiments, the distance between the imaging device 608 and the surface of the object can be a height of the object (e.g., which advantageously can be used to determine a focus distance of the imaging device 608). The illumination source 626 can include one or more light sources (e.g., a light emitting diode ("LED")), and can be configured to illuminate at least a region of a FOV 628 of the imaging device 608. For example, the illumination source 626 can emit light at the conveyor 602, the object 604, etc., to illuminate the FOV 628 for better image acquisition.

As shown in FIG. 14A, the imaging device 608 can be positioned above the conveyor 602, and can be aligned with a gravity vector 630. For example, the imaging device 608 can be positioned so that the optical axis 622 is substantially parallel to the gravity vector 630. In this way, when the variable focus lenses 618, 620 are liquid lenses, a membrane of each liquid lens can be in a concave configuration, which can elicit fewer undesirable gravity imaging artifacts. In other configurations, the imaging device 608 can be angled relative to the gravity vector 630. In this way, the imaging device 608 can acquire an image that includes multiple different sides of the object 604 (e.g., as opposed to only the upper side of the object 604). In some embodiments, the orientation of the imaging device 608 can be fixed (e.g., with respect to the conveyor 602). For example, the imaging device 608 can be coupled to a structure 632 (e.g., a support structure, a bracket, a frame, etc.) to, for example, fix the orientation of the imaging device 608. In some embodiments, the imaging device 608 can include an orientation sensor (e.g., an accelerometer, a gyroscope, an internal measurement unit, etc.) that can be configured to sense the orientation of the imaging device 608 relative to the gravity vector 630. This orientation of the imaging device 608 can be used to mitigate undesirable gravity effects. For example, the orientation of the imaging device 608 can be used to cause the imaging device 608 to operate in a first mode of operation or a second mode of operation (e.g., as described above with respect to the imaging device 500).

In some embodiments, a height of each of the objects 604, 606 (e.g., and any other object supported and moved by the conveyor 602) can be less than or equal to half the distance between the imaging device 608 and the conveyor 602 (e.g., the height of the imaging device 608 above the conveyor 602). In this way, an upper surface of the object 604 is not too close to the imaging device 608, which may be too close to the imaging device 608, even with the zooming capability of the imaging device 608. In some configurations, the distance between the imaging device 608 and the conveyor 602 (e.g., the height of the imaging device 608 above the conveyor 602) can be less than or equal to 1600 millimeters.

As shown in FIG. 14A, a width 634 of the FOV 628 of the imaging device 608 can be larger than the width of the conveyor 602. In some cases, a width of the conveyor 602 can be smaller than a width of the FOV 628 of the imaging device 608 at an intersection with the conveyor 602. Correspondingly, the FOV 628 of the imaging device 608 can be substantially the same as the width of the conveyor 602, or a width of a FOV 628 of the imaging device 608 at an intersection with the conveyor 602 can be substantially the same as the width of the conveyor 602. One advantage to the systems and methods disclosed herein is that the FOV 628 can remain effectively constant over a variety of focal distances, so the same frame rate can be utilized for scanning at different focal distances without requiring an increase in sampling rate (or without suffering from reduced number of images for attempted decoding due to a smaller FOV 628). To the contrary, with fixed focal length systems, the FOV becomes smaller and smaller as the distance to the camera gets shorter, so increased sampling rates are required in order to achieve an adequate number of images of code candidates that are near to the imaging device.

In some embodiments, the imaging device 608 can acquire one or more images of each of the objects 604, 606 including a symbol on the respective object, as the objects 604, 606 move along the conveyor 602. In addition, the imaging device 608 (e.g., the controller of the imaging device 608) can also determine, using the distance sensor 624, a distance between the imaging device 608 and a surface of the object 604 (e.g., a height of the object), as the object 604 travels along the conveyor 602. In this way, the imaging device 608 can adjust a total focal length of the imaging device 608 to acquire an image of the symbol 612 of the object 604 that is of a sufficient quality to be able to decode the symbol 612. For example, the imaging device 608 can set the focal length of the imaging device 608, including a first focal length of the variable focus lens 618 and a second focal length of the variable focus lens 620 (e.g., each of which at least partially define the total focal length of the imaging device 608), based on the distance between the imaging device 608 and the object 604 (e.g., the height of the object 604). In this way, the imaging device 608 can focus so that the focal plane of the FOV of the imaging device 608 is substantially at a surface of the object 604 that includes a symbol (e.g., an upper surface of the object 604).

As shown in FIG. 14B, a distance 636 between the objects 604, 606 can be relatively small, and the conveyor 602 can be moving at a relatively fast speed (e.g., greater than 1 m/s, 2.5 m/s). Thus, the allotted time between when the object 604 intersects the FOV 628 versus when the object 606 intersects the FOV 628 (and the object 604 is outside of the FOV 628) is quite small. Accordingly, systems and processes herein can advantageously minimize the number of images acquired before an image is acquired that is of a sufficient quality to decode a symbol of the image. In other words, the systems and processes herein can ensure that the images acquired of a symbol of an object are of higher quality, so that an image of a sufficient quality for decoding a symbol of the image is acquired before the object leaves the FOV 628 of the imaging device. In this regard, the imaging device 608 can be calibrated, based on a calibration curve, a calibration configuration, etc. For example, the imaging device 608 can be calibrated so that the imaging device 608 assumes that the first variable focus lens has an optical power of substantially zero diopters when substantially no current is delivered to the first variable focus lens, and that the second variable focus lens has an optical power of substantially zero diopters when substantially no current is delivered to the second variable focus lens. This can be the origin of the calibration curve, and can thus be far less computationally taxing for the controller of the imaging device 608 when assuming the optical power is substantially zero when substantially no current is delivered.

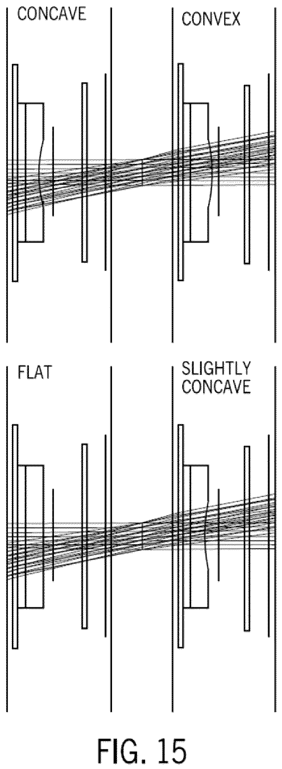

FIG. 15 shows a schematic illustration of the zero diopter distance definition to use as a reference point in the calibration curve. For example, as shown in FIG. 15, the imaging device 608 sets each variable focus lens that is a liquid lens to consume zero current. Then, the imaging device assumes that each membrane of each liquid lens is flat (e.g., has substantially zero optical power), and the imaging device can attempt to acquire an image of the object (including the symbol) at this optical power (e.g., because there will be at least some inherent curvature of the membrane of the liquid lens), or can use this as an origin (or reference point) to begin zooming. In some embodiments, even though the imaging device assumes that each of the variable focus lenses that are liquid lenses have membranes that are substantially flat, each liquid lens can inherently have an offset in the curvature magnitude and direction (e.g., because of the difference in the amount of liquid each liquid lens contains, which can introduce the deviations). Accordingly, by calibrating the imaging device to consider the inherent curvature deflections (e.g., by setting the calibration curve to be at a zero diopter position in which the imaging device assumes that each membrane of each liquid lens is substantially flat when no current is delivered to each liquid lens), the focus of the imaging device relative to a working distance can be far more accurate. In addition, in some cases, when each liquid lens is set to have an optical power of substantially zero, there is at least some slightly inherent curvature in each membrane, and so a working distance of the imaging device can be associated with the liquid lenses in these configurations. In this way, the imaging device can attempt to acquire an image of an object width the liquid lenses in these configurations (e.g., that is of a sufficient quality for decoding), which can be computationally simple (e.g., this configuration corresponds to the origin of the calibration curve).

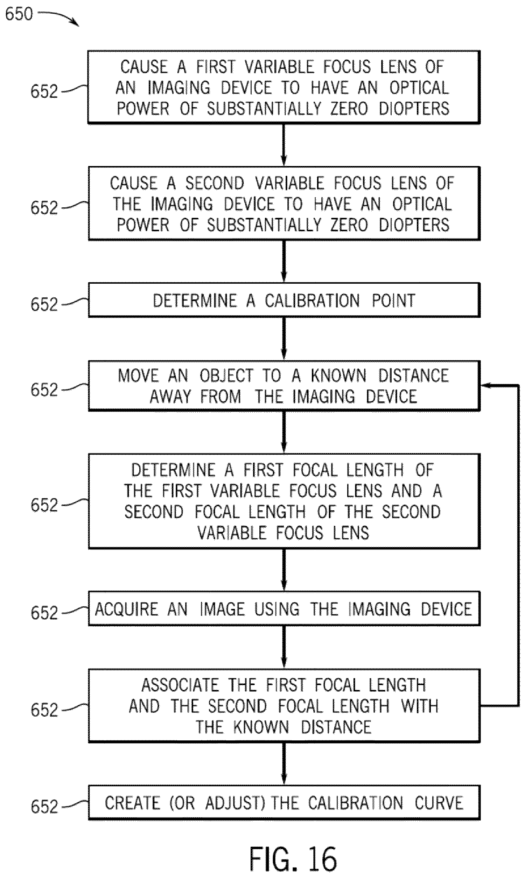

FIG. 16 shows a flowchart of a process 650 for calibrating an imaging device. The process 650 can be implemented using any imaging devices, any optical systems, etc., described herein. In addition, the process 650 can be implemented using one or more computing devices (e.g., the controller of the imaging device), as appropriate.

At 652, the process 650 can include a computing device causing a first variable focus lens of an imaging device to have an optical power of substantially zero diopters. In some cases, including when the first variable focus lens is a liquid lens, this can include a computing device causing substantially no current (e.g., substantially 0 mA is provided), substantially no voltage, etc., to be delivered to the one or more electrodes of the liquid lens. In some configurations, this can include a computing device assuming that the first variable focus lens of the imaging device has an optical power of substantially zero diopters. For example, when the first variable focus lens is a liquid lens, this can include a computing device assuming that the first variable focus lens is substantially flat, substantially planar, etc.

At 654, the process 650 can include a computing device causing a second variable focus lens of the imaging device to have an optical power of substantially zero diopters. In some cases, similarly to the block 652, the process 650 can include a computing device causing substantially no current (e.g., substantially 0 mA is provided), substantially no voltage, etc., to be delivered to the one or more electrodes of the liquid lens. In some configurations, this can include a computing device assuming that the second variable focus lens of the imaging device has an optical power of substantially zero diopters. In some configurations, as described above, the first variable focus lens can be separated from the second variable focus lens along an optical axis of the imaging device (e.g., and with the optical axis intersecting the first variable focus lens and the second variable focus lens).

At 656, the process 650 can include a computing device determining a calibration point (e.g., an origin of a calibration curve), based on the configuration of the first variable focus lens and the configuration of the second variable focus lens. For example, a computing device can set an entire optical power of the imaging device (or a combined optical power of the first variable focus lens and the second variable focus lens) to be at a maximum possible optical power (of the imaging device or of the combined optical power) for a distance from the imaging device and the object being at 0 mm (e.g., the working distance of the imaging device, including the distance the focal plane of the FOV of the imaging device is from the imaging device, such as a front lens of the imaging device). Correspondingly, the computing device can set a minimum focal distance of the imaging device or of the combined focal distance of the first variable focus lens and the second variable focus lens to 0 mm for the distance form the imaging device and the object being at 0 mm. As described above, by considering inherent curvatures of the membranes of the liquid lenses at these positions, a more robust and accurate calibration curve can be created and used to calibrate the imaging device.

At 658, the process 650 can include moving an object to a known distance away from the imaging device. In some cases, the object can include a symbol of standard dimensions (e.g., a standard barcode) on a surface of the object (e.g., an upper surface of the object). In some cases, this can include a computing device determining a distance between the imaging device and the surface of the object (e.g., the surface of the object including a symbol to be decoded) to, for example, ensure that the measured distance and the known distance are within a particular threshold (e.g., and that the measure distance "seen" by the imaging device corresponds closely to the known distance). In some cases, this distance can be the desired working distance for the imaging device. In some cases, this can include a computing device determining the distance between the imaging device and the surface of the object, using a distance sensor.

At 660, the process 650 can include a computing device determining a first focal length of the first variable focus lens and a second focal length of the first variable focus lens. In some configurations, the computing device can determine the first focal length and the second focal length using at least one of the distance of the object, the distance between one or more optical components of the imaging device (e.g., the known distance at the block 658), the size of the aperture, the position of the aperture relative to the first variable focus lens and the second variable focus lens, etc. In some embodiments, the computing device can determine the first focal length and the second focal length using one or more of the following equations [3] -[12] below.

$$[3]\ FNr = \frac{f'_{Total}}{\emptyset_{ep}}$$

where

$$[4]\ f'_{Total} = \frac{f'_1\ f'_2}{f'_1 + f'_2 - e}$$

on the other hand;

$$[5]\ \beta'_{ep} = \frac{\emptyset_{ep}}{\emptyset_{as}} = \frac{a'_{as}}{a_{as}}$$

and solving [5]f or $\emptyset_{ep}$, we get;

$$[6]\ \emptyset_{ep} = \frac{a'_{as}}{a_{as}}\emptyset_{as}$$

substituting [6]in [3]

$$[7]\ FNr = \frac{f'_{Total}\ a_{as}}{a'_{as}\emptyset_{as}}$$

also, substituting [4]in [7]

$$[8]\ FNr = \frac{f'_1\ f'_2\ a_{as}}{(f'_1 + f'_2 - e)a'_{as}\emptyset_{as}}$$

it also possible to rewrite $a'_{as}$ following the Gauss equation as:

$$[9]\ a'_{as} = \frac{f'_1 a_{as}}{f'_1 + a_{as}}$$

*and introducing* [9]*in* [8]

$$[10] \quad FNr = \frac{f'_1 f'_2 a_{as} (f'_1 + a_{as})}{(f'_1 + f'_2 - e)\emptyset_{as} f'_1 a_{as}} = \frac{f'_2 (f'_1 + a_{as})}{(f'_1 + f'_2 - e)\emptyset_{as}}$$

*deriving in* [10]*for a*$_{as}$, *we get the constant F*

$$[11] \quad \frac{\partial FNr}{\partial a_{as}} = \frac{f'_2 (f'_1 + f'_2 - e)\emptyset_{as}}{[(f'_1 + f'_2 - e)\emptyset_{as}]^2} = 0$$

$$[12] \quad f'_1 + \overset{49}{f'_2} - e = 0$$

The equations [3]-[12] above can be used to determine focal values for the first variable focus lens and the second variable focus lens to maintain a substantially constant F# (i.e., f-number) of the imaging device across multiple known distances (e.g., multiple known working distances of the imaging device), which can be important to ensure good image quality (e.g., to decode a symbol). For example, equations [3]-[12] show how to get the condition for keeping the F# constant over the whole range of the focal values available for the imaging device.

Eq 3 (shorthand for equation [3], which will be utilized below with respect to this and other numbered equations) shows the definition of the relative aperture for an optical system, eq 4 shows how the total focal value of the system can be calculated, which can consider the focal values of the two different groups of an optical system and the optical distance between them. For example, $f'_1$ can include the groups of lenses 502, 504, 506, and the variable focus lens 510, while $f'_2$ can include the variable focus lens 512, the group of lenses 508, and the image sensor 514. In some cases, $f'_1$ and $f'_2$ can be separate from each other at the aperture 522. In other words, the aperture 522 can separate $f'_1$ from $f'_2$. This optical distance is referred to as the principal planes of the two parts. Eq 5 governs how the magnification of the entrance pupil is calculated and taken into account and the distances of the aperture stop with respect to the $f'_1$ system. Finally, eq 6 simply solves eq 5 for the diameter of the entrance pupil and having the option of introducing that term in eq 3 as it can be seen in eq 7. Eq 8 also considers the eq 4 and it expresses the dependency of the f-number ("FNr") with the position of the aperture stop in the system. With the help of eq 9, the image distance of the aperture stop is substituted in eq 8 and it ends up on the eq 10 where finally, the FNr depends only of the object distance of the aperture stop but not of the image distance. Deriving eq 10, we get the eq 11 following the basic derivation rules and finally, the eq 12 shows the condition of the FNr for this system. A skilled artisan will recognize how these equations can be combined with positioning of the aperture described above.

In some embodiments, the block 660 can include a computing device causing the first variable focus lens to be at the first focal length, and the second variable focus lens to be at the second focal length.

At 662, the process 650 can include a computing device acquiring an image of a symbol of the object using the imaging device with the first variable focus lens being at the first focal length and the second variable focus lens being at the at the second focal length. In some embodiments, the block 662 can include a computing device determining whether or not the symbol in the image can be decoded. If at the block 662, the computing device cannot decode the symbol (or the computing device determines that the symbol cannot be decoded), the process 650 can proceed back to the block 660 to determine different focal lengths for the first variable focus lens and the second variable focus lens (e.g., which can include adjusting the first focal length and the second focal length). In this way, the focal lengths of the variable focus lenses can be tweaked slightly to ensure that the focal plane of the imaging device is substantially at the surface of the object that includes the symbol. If, however, at the block 664, the computing device can decode the symbol (or the computing device determines that the symbol can be decoded), the process 650 can proceed to the block 664.

At 664, the process 650 can include a computing device associating the first focal length and the second focal length with the known distance (e.g., which can be a desired working distance of the imaging device). In some embodiments, including after the block 664 has been completed, the process 650 can proceed back to the block 658 to move the object to another known distance (e.g., different from the known distance) away from the imaging device. Then, the process 650 can proceed through the same blocks (e.g., blocks 660-664) until a total number of desired data points have been acquired.

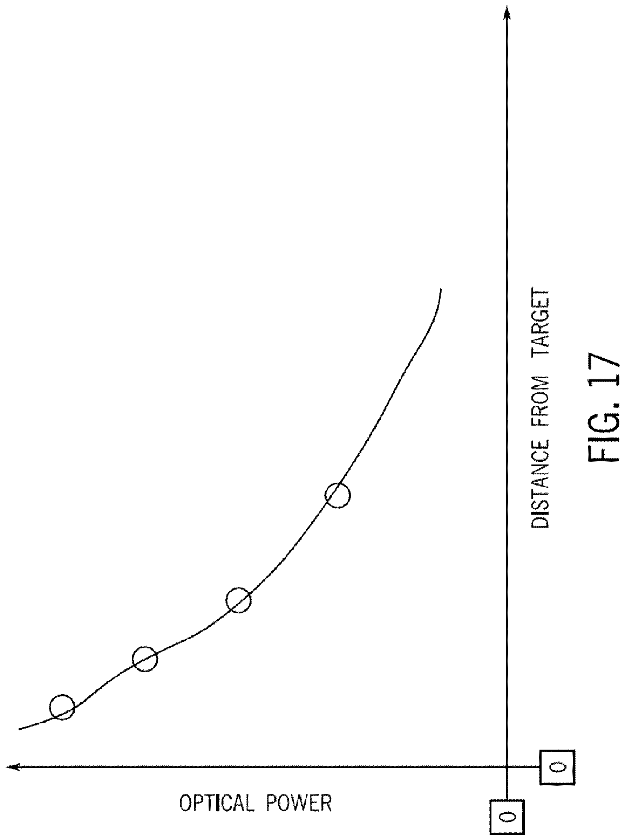

At 668, the process 650 can include a computing device after one or more iterations have been completed (e.g.,

with each iteration creating one data point), creating (or adjusting) a calibration curve using the number of data points (e.g., with each data point including a known distance from the target and a combined focal length or a combined optical power associated therewith). In some embodiments, creating a calibration curve can include a computing device fitting a curve with the data points. In this regard, FIG. 17 shows a graph of a calibration curve of the optical power versus the distance from the target (e.g., the known distance from the target). The calibration curve has been fit to intersect with each of the calibration points.

In some embodiments, the block 668 can include a computing device calibrating the imaging device using one or more calibration points. In some cases, the one or more calibration points can include the calibration point at the block 656, other calibration points, a calibration curve using multiple calibration points, etc.

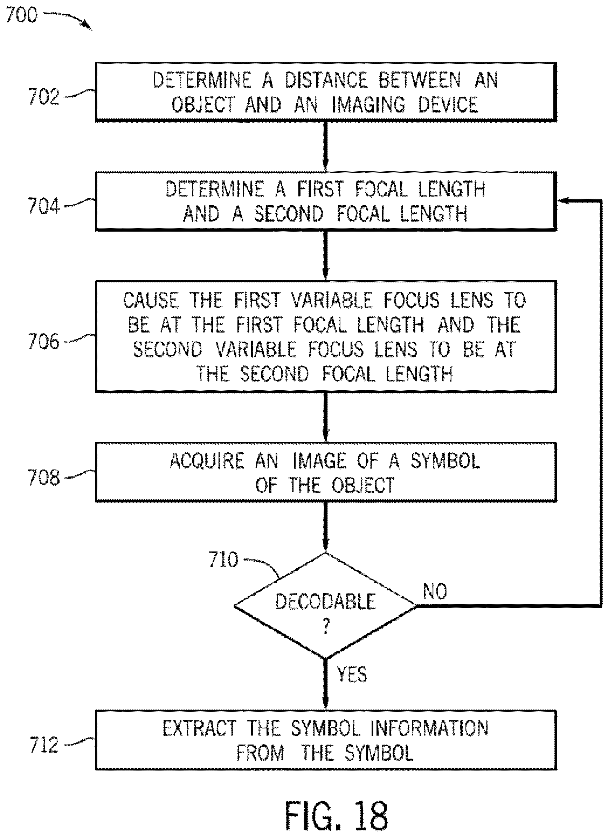

FIG. 18 shows a flowchart of a process 700 for decoding a symbol of an object. The process 700 can be implemented using any imaging devices, any optical systems, etc., described herein. In addition, the process 700 can be implemented using one or more computing devices (e.g., the controller of the imaging device), as appropriate.

At 702, the process 700 can include a computing device determining a distance between an object and an imaging device. In some cases, this can include a computing device determining the distance using a distance sensor (e.g., of the imaging device).

At 704, the process 700 can include a computing device determining a first focal length of a first variable focus lens of an imaging device and a second focal length for a second variable focus lens. In some cases, including at the first iteration of the process 700, the computing device can determine that the first focal length and the second focal length are each substantially 0 diopters. In this way, the computing device can quickly attempt to acquire an image that is of a sufficient quality by doing little to no computations, which can be beneficial in high-speed settings in which objects move along conveyors quickly.

At 706, the process 700 can include a computing device causing the first variable focus lens to be at the first focal length and the second variable focus lens to be at the second focal length.

At 708, the process 700 can include a computing device acquiring an image of a symbol of the object (e.g., using the imaging device) with the first variable focus lens at the first focal length and the second variable focus lens to be at the second focal length.

At 710, the process 700 can include a computing device determining whether or not the symbol is able to be decoded. In some cases, this can include a computing device attempting to decode the image that includes the symbol. If at the block 710, the computing device cannot decode the symbol (or the computing device determines that the symbol cannot be decoded), the process 700 can proceed back to the block 704 to determine different focal lengths for the first variable focus lens and the second variable focus lens (e.g., which can include adjusting the first focal length and the second focal length). For example, this can include a computing device determining another first focal length of the first variable focus lens and another second focal length of the second variable focus lens. In some cases, the another first focal length and the another second focal length can each be determined using the distance between the object and the imaging device (e.g., determined at the block 702). In addition, the another first focal length and the another second focal length can each be determined using one or more equations described herein, a calibration curve, a calibration point, etc. In some embodiments, the process 700 can proceed through the blocks 706, 708 to attempt to acquire an image of a sufficient quality to decode the symbol. If, however, at the block 710, the computing device can decode the symbol (or the computing device determines that the symbol can be decoded), the process 700 can proceed to the block 712.

At 712, the process 700 can include a computing device extracting symbol information from the symbol (e.g., of the image that was deemed decodable). In some cases, this can include a computing device decoding the symbol to determine the symbol information of the symbol. For example, this can include decoding a barcode to determine a barcode string of the barcode.

In some embodiments, some or all blocks of the process 700, including multiple iterations of portions of the process 700, can occur while the object is positioned within a FOV of the imaging device. In this way, the imaging device can acquire multiple different images using different settings (e.g., different focal lengths) to improve the image quality of previously acquired images until an image has been acquired of a sufficient quality to decode the symbol.

Several features of the present disclosure may be present in any of the aspects described herein. For instance, in all cases, the controller can be adapted to restrain the first liquid lens and second liquid lens to settings where the F# of the imaging device is constant independent of zoom level. As another example, in all cases, the controller can be adapted to simultaneously adjust the zoom level and focus. In one particular implementation, the controller can restrain the first liquid lens and the second liquid lens to settings where the F# of the imaging device is changed with respect to the zoom level. As yet another example, the controller can be adapted to control the liquid lenses to project a zoom-independent area of a focal plane projected onto the image sensor. In other words, regardless of the distance from the imaging device or the corresponding zoom level, a feature of a given area (e.g., a barcode) will take up the same area on the image sensor (e.g., within 10%).

In the above systems and other comparative examples of optical systems used in machine vision applications (e.g., logistics, inspection, etc.), image quality, stability, and speed are important parameters. These parameters are affected by several factors. For systems that implement variable focus optical components (e.g., liquid lenses), these parameters are affected by thermal drift and stability, which affect the speed of both zoom and focusing processes. In addition, liquid lenses with larger clear apertures may exhibit an increasing level of aberrations, which may result in a drop in performance if not compensated for. Thus, the present disclosure further provides for examples of varifocal (i.e., variable focus) systems with improved stability, speed, and image stability.

In one example, systems and methods in accordance with the present disclosure may implement modified optical system designs, including modified liquid lens implementations, to provide improved image quality. Image quality is affected by parameters of the optical system that include the footprint of the liquid lens(es). That is, for each position in the FOV of the image sensor, a bundle of rays travels through the system. The set of rays traverse every element on a portion of the material of the element, referred to as a footprint herein. Thus, the footprint of a given optical element refers to the two dimensional area, measured in a plane perpendicular to the optical axis, through which a ray bundle (i.e., a group of light rays) passes. In some systems with liquid lens implementations, the liquid lens is considered as an aperture stop (i.e., the place through which all rays pass), which implies that the footprint of the liquid lens corresponds to 100% of the clear aperture of the liquid lens element.

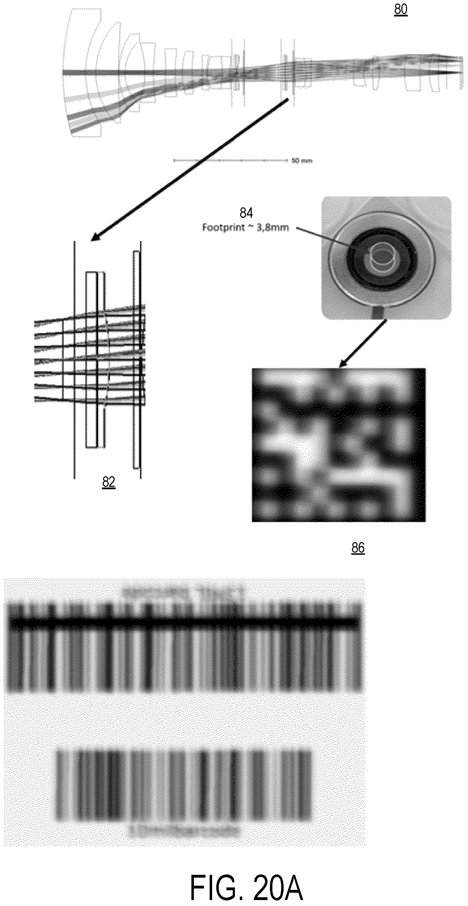

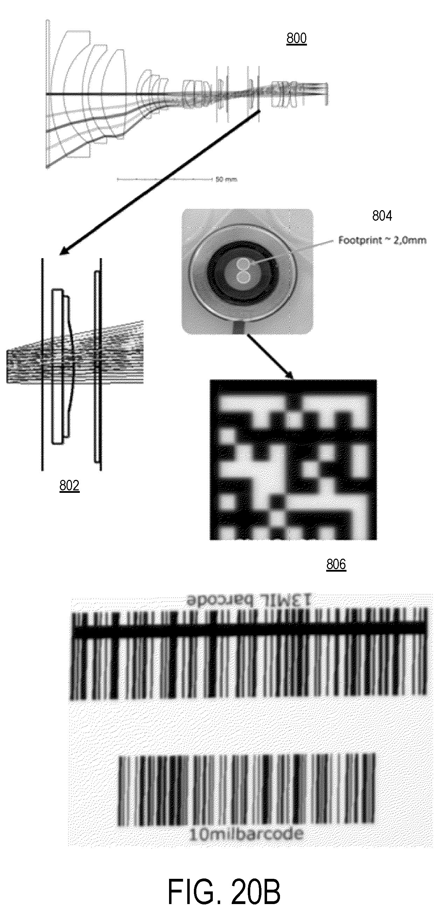

In cases where liquid lenses are larger than a certain size, degradation in the shape of the membrane with respect to an asphere results in increased aberrations in the system. For example, if the footprint is higher than 3 mm in clear aperture, the aberrations introduced by the membrane become more substantial and are difficult or impossible to compensate (e.g., because there are no other optical elements available to perform the compensation). Moreover, if one were to introduce additional elements to so compensate, such as additional glass elements, the system becomes more expensive and bulkier. In systems that implement multiple liquid lenses, one lens cannot compensate for the aberrations introduced by the other because the system may have no moving parts. As a result of these aberrations, the image quality may drop significantly in terms of, for example, image sharpness. This effect is illustrated in FIGS. 20A and 20B, which compare a reference system with an implementation of the disclosed technology.

FIG. 20A illustrates a comparative optical system 80 in which the footprint 84 of the liquid lens 84 is approximately 3.8 mm. FIG. 20B illustrates an optical system 800 in accordance with the present disclosure, in which the footprint 804 of the liquid lens 802 is approximately 2.0 mm. In both figures, a schematic of the optical system is shown at top, an expanded view of a liquid lens element is shown at left, a front view of the footprint of the liquid lens element is shown at right (each showing examples of circular ray bundles), and sample images of barcodes are shown at bottom. In both systems, the same liquid lens elements are present. As can be seen by comparing FIGS. 20A and 20B, the comparative optical system 80 uses a larger footprint 84 of the liquid lens 82, whereas the system of the present disclosure utilizes a smaller section of the liquid lens 802. That is, in FIG. 20A, ray bundles occupy a larger surface area of the liquid lens 82 (in a footprint 84 of about 3.8 mm), whereas in FIG. 20B, ray bundles occupy a smaller surface area of the liquid lens 802 (in a footprint 804 of about 2.0 mm) In particular, both drawings further illustrate examples of one-dimensional and two-dimensional bar codes 86, 806 read by the corresponding optical system. The system of FIG. 20B generates better contrast and less aberration on the image, as can be seen by the higher image quality of barcode images 806 compared to barcode images 86.

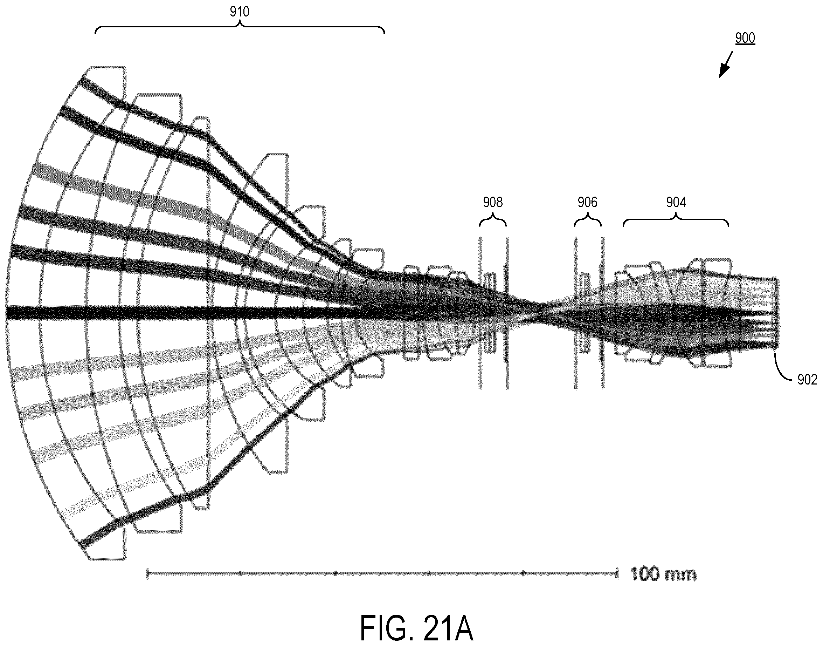

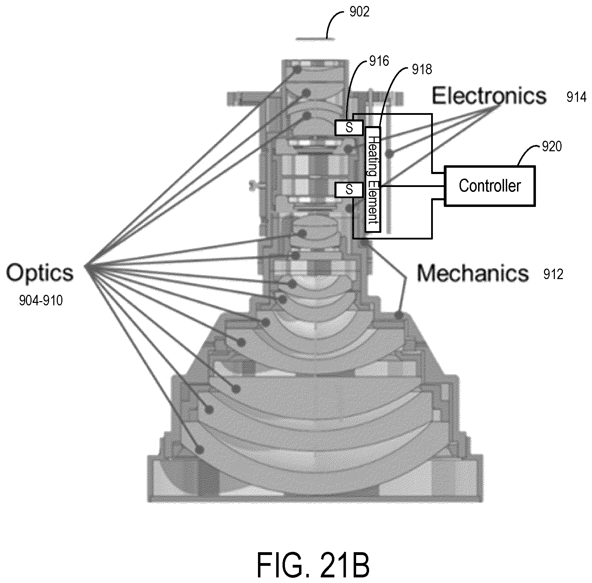

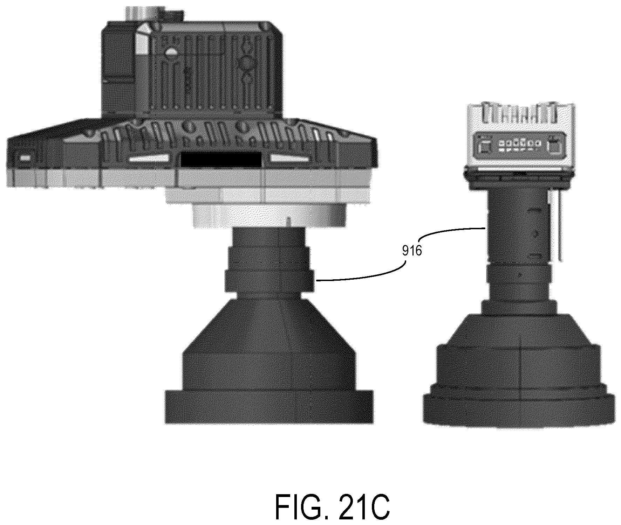

FIGS. 21A-21C show an example of the system of FIG. 20B in more detail, as implemented into an imaging device 900. In FIG. 21A, an optical system is shown that includes a plurality of lenses and an image sensor 902. FIG. 21A further shows the path of various bundles of light rays through the system, and incident on the image sensor 902. As noted above, the image sensor 902 may be of any suitable architecture. Examples of suitable image sensors 902 include, but are not limited to, a CMOS camera sensor, a CCD sensor, an NMOS camera sensor, and the like. FIG. 21B illustrates a cross-sectional view of the optical system of FIG. 21A implemented into a package within a housing. In addition to the optical components, the imaging device 900 includes mechanical components 912 and electronic components 914. In some implementations (e.g., to implement active thermal feedback as will be described in more detail below), the electronic components may include temperature sensors 916 associated with (e.g., disposed proximate to and/or disposed within) each liquid lens, an active heating element 918 associated with (e.g., disposed proximate to and/or within) one or more of the liquid lenses, and a controller 920 operatively connected to the temperature sensors 916 and the active heating element 918. The optical, mechanical, and electronics components may cooperate in any combination to implement the imaging methods described herein, including but not limited to the simultaneous zoom and focus adjustment methods set forth above. FIG. 21C illustrates a machine vision system having the imaging device 900 within a housing 922 in side and front plan views.

Thus, the optical system of the present disclosure, as shown in FIG. 20B and 21A-21C, includes a plurality of lenses positioned along an optical axis, including (from right to left) a rear fixed focus lens group 904 positioned in front of the image sensor 902, a first liquid lens 906 having a first lens diameter and positioned in front of the image sensor 902 and the rear fixed focus lens group 904, and providing a clear aperture of the system, a second liquid lens 908 having a second lens diameter and positioned in front of the first liquid lens 906, and a front fixed focus lens group 910 positioned in front of the second liquid lens 908. The first liquid lens 906 and the second liquid lens 908 are positioned such that a ray bundle diameter which is incident on at least one of the first liquid lens 906 or the second liquid lens 908 is less than the respective lens diameter (i.e., the footprint of the first liquid lens 906 and/or the second liquid lens 908 is less than the total footprint of the corresponding liquid lens). Herein, the phrase "total footprint" of a given optical element refers to the lens diameter. Thus, in the optical system of the present disclosure, the ray bundle diameter at an element that is less than the lens diameter of the element. The second liquid lens 908 may provide another clear aperture of the system. The ray bundle diameter may be less than or equal to 50% of the corresponding lens diameter. In an example, the lens diameter may be 9 mm and the ray bundle diameter may be less than 3 mm. In some examples, however, the ray bundle may not be exactly circular, in which case the ray bundle may have a longest dimension that is less or equal to than 50% of the respective lens diameter (e.g., less than 3 mm). For example, if the ray bundle is an oval, the "longest dimension" corresponds to a major axis of the circle. In any configuration, the ray bundle diameter or longest dimension may be less than or equal to 50% of the lens diameter.

Moreover, the design strategy for the system of FIGS. 20B and 21A-21C does not result in penalties in terms of aperture value for the system, at least because the pupils may be magnified accordingly and because the footprint is well considered under certain values (e.g., under 3 mm). These systems provide improved performance and may make use of typical pixel sizes such as 2.7 $\mu$m.

The imaging device 900 of FIGS. 20B and 21A-21C may be manufactured by a variety of manufacturing technologies. In an example, individual components may be separately manufactured and then assembled. Assembly may be accomplished by providing the image sensor 902, and then providing the plurality of lenses along the optical axis of the imaging device 900, in which the plurality of lenses include front and rear fixed focus lens groups 904, 910 and first and second liquid lenses 906, 908 as described above.

In another example, systems and methods in accordance with the present disclosure may implement thermal control mechanisms, such as one or more active heating systems. As generally noted above, controlling the thermal drift and other thermal parameters of the lenses presents a challenge in the art. Further the performance of liquid lenses is affected by the temperature of the liquid lenses, in particular. In the case of a dual liquid lens imaging system, the challenge is increased at least because there are two liquid lenses to be controlled and stabilized over a certain range of temperature values. Comparative attempts to provide thermal control in systems having multiple liquid lens suffer from difficulties caused by, for example, part-to-part variation, differing amounts of liquid in different lenses, a lack of any temperature sensor close to the liquid, and the like.

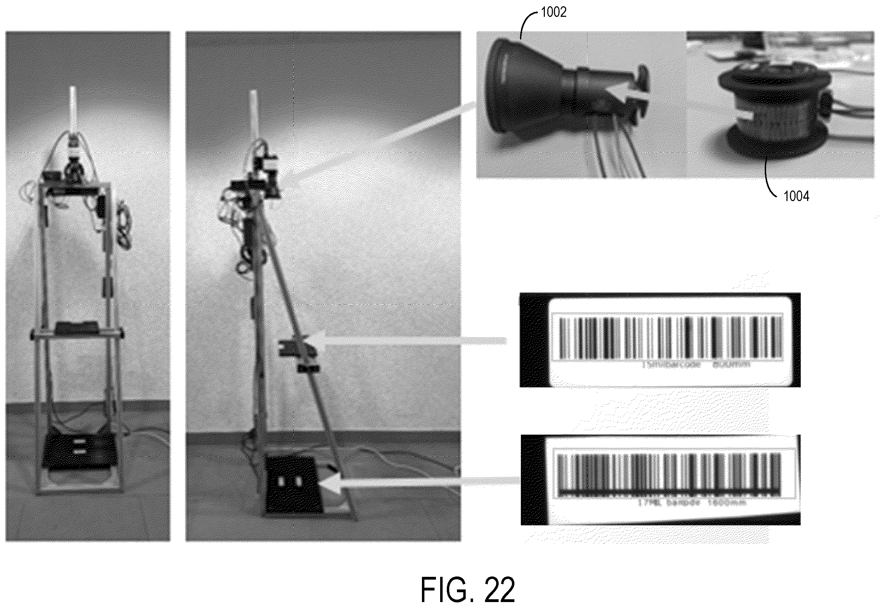

The present disclosure sets forth a platform of liquid lenses containing a temperature sensor and an active heating system to address these and other challenges in machine vision systems. FIG. 22 illustrates one example of such a system 1002 (which may be the same as or similar to any of the image devices described above). In the upper right portion of FIG. 22, an active heating element 1004 is shown. This element 1004 may be a thermal pad placed in proximity to (e.g., in contact with) at least one of the liquid lenses and inside a housing of the system 1002. Because the liquid lenses are equipped with built-in temperature sensors, the heat provided by the pad can be tracked effectively by the temperature sensor of the liquid lens and, by using a thermal calibration, the system 1002 may provide a closed loop to maintain the temperature of the lenses and thus maintain the optical power of the liquid lens. The liquid lens, the temperature sensor, and optionally the active heating element 1004 may be integrated together into a unitary package within the housing. At the left portion of FIG. 22, an experimental setup is shown to test the ability of the imaging device to image at two different working distance extremes. In this example, the optical power difference is approximately 40 diopters. At the bottom right of FIG. 22, images of barcodes captured at the working distance extremes are shown.

Thus, the imaging devices set forth herein may further comprise an active heating element 1004 configured to provide heating to a circumference (or portion thereof) of one or more of the liquid lenses included therein. In an example, the active heating element 1004 may include a thermal pad that surrounds at least a portion of the circumference of one or more of the liquid lenses. Where multiple liquid lenses are subject to thermal control, the device may include a single thermal pad surrounding the circumferences of all liquid lenses so as to simultaneously adjust the temperature of all liquid lenses (i.e., such that a single application of current heats both lenses at the same time), or may include multiple thermal pads each surrounding the circumference of one or a subset of the liquid lenses. As shown in FIG. 21B, each liquid lens in the system 1002 may include a temperature sensor, and the system may be provided with a controller that receives a temperature measurement from the temperature sensor(s) and, based on the temperature measurement, generates a control signal to modify an operation of the active heating element 1004. The control signal may modify the temperature based on the magnitude, duration, duty cycle (for pulse width modulation), etc., of the control signal. Thereby, the controller causes the active heating element 1004 (e.g., the thermal pad or pads) to modify a temperature of the corresponding liquid lens, for example by controlling an electrical current applied to the active heating element 1004. In this regard, the control signal itself may be the electrical current applied to the active heating element 1004. In other examples, one temperature sensor may be provided for multiple liquid lenses. In either case, temperature control may be achieved by causing the active heating element 1004 to maintain a minimum predetermined temperature and/or to maintain a temperature of the corresponding liquid lens within a predetermined range.

The controller may maintain the temperature in any appropriate manner. For example, the controller may monitor data corresponding to the current temperature of a liquid lens, compare the current temperature to a threshold range, and increase/decrease the current if the current temperature is below/above the threshold range as appropriate. Alternatively, the controller may monitor the current temperature of the liquid lens, compare the current temperature to a threshold range, and turn on/off the control signal if the current temperature is below/above the threshold range as appropriate. In one example, if the controller determines that the temperature has fallen to the minimum acceptable temperature (e.g., 40 °C), the controller may turn on the electrical current to the heating element. The threshold range may be predetermined. In another example, the amount of current increase/decrease may be based on the magnitude of difference between the current temperature and the upper/lower bounds of the threshold range (and/or the magnitude of difference between the current temperature and the target temperature). In this example, a larger amount of current may thus be applied to cause the temperature of the liquid lens to quickly increase toward the target temperature, and then the amount of current may be lowered as the temperature approaches the target temperature to avoid overshoot. In any event, the relationship between current and temperature may be determined by an equation or algorithm stored in the controller and/or by a lookup table stored in a memory associated with the controller. The temperature control may be performed based on a target response time of the liquid lens(es), as described below.

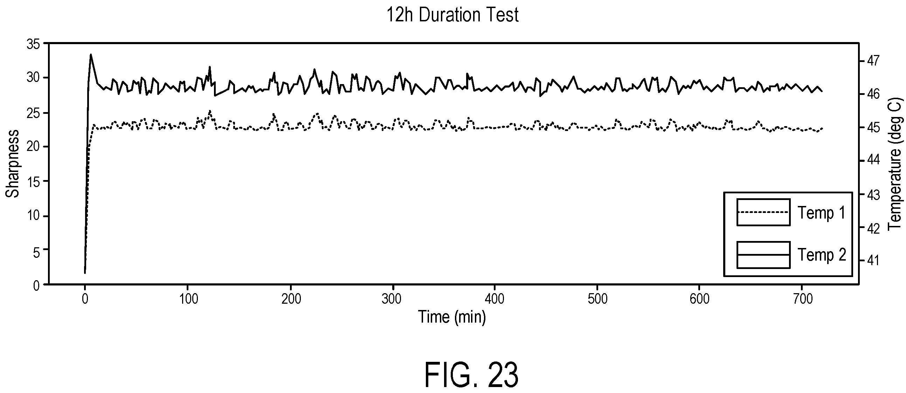

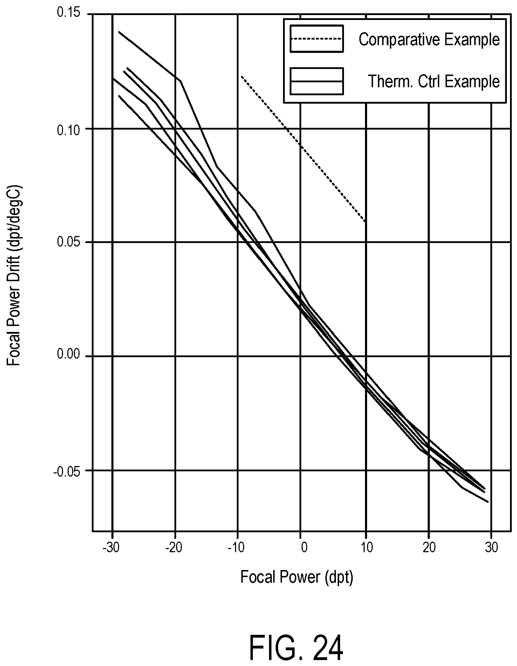

To test the efficacy of this system 1002, a sharpness test was performed by reading nonstop at a 15 ms response time for twelve hours. The results of this test are shown in FIG. 23 across a resolution range of 1.19-1.27 PPM for two different temperatures, where different barcodes at low magnification were imaged with a high reading rate, resulting in a greater than 99.9% success rate and a no-read rate of only 0.042%. The active thermal control mechanism 1004 provides up to three times less thermal drift compared to comparative systems. This comparison is illustrated in FIG. 24, in which the top line shows a comparative example without the disclosed thermal control system whereas the bottom lines show an example with the disclosed thermal control system. It can be seen that at, for example, a focal power of 0 dpt, the focal power drift is reduced from approximately 0.9 dpt/°C to approximately 0.25 dpt/°C.

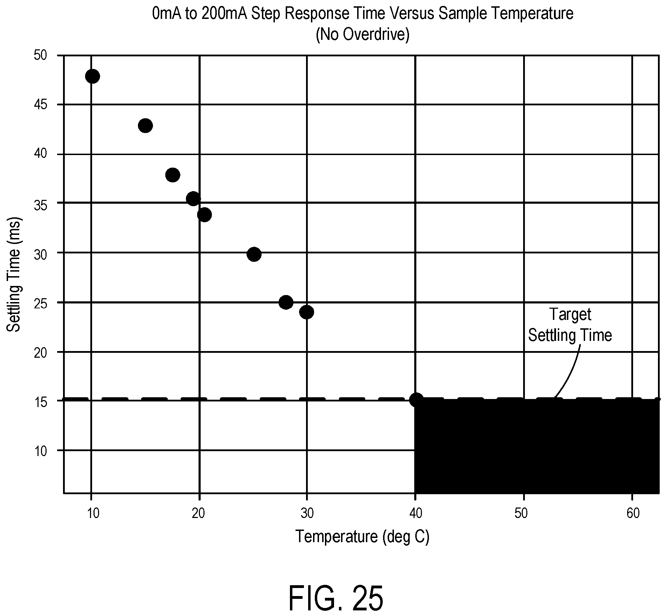

In addition to the stability and thermal drift benefits, the thermal control mechanism provides speed benefits. The speed of a machine vision system implementing a liquid lens is related to the viscosity of the liquid, and the viscosity relates in turn to the temperature. In particular, the liquid in the liquid lens is less viscous and thus exhibits a faster response at higher temperatures. Thus, in addition to providing the ability to maintain a stable temperature, the active heating system may control the temperature such that the liquid lenses exhibit a response within a desired range (e.g., 10-15 ms). The graph shown in FIG. 23 includes data for liquid lens temperatures of both 45 °C and 46 °C. FIG. 25 shows the relationship between the response time of the liquid lens ("settling time") and the temperature of the liquid lens. A minimum predetermined temperature of 40 °C or more may be used, as shown by the shaded area of FIG. 25. In general, the temperature of the liquid lens may be maintained to be between 30 and 80 °C (e.g., between 40 and 80 °C, between 40 and 70 °C, between 40 and 60 °C, between 40 and 50 °C, between 30 and 70 °C, between 30 and 60 °C, between 30 and 50 °C, between 30 and 40 °C, between 50 and 80 °C, between 50 and 70 °C, between 50 and 60 °C, between 35 and 75 °C, between 35 and 65 °C, between 35 and 55 °C, between 35 and 45 °C, between 45 and 75 °C, between 45 and 65 °C, between 45 and 55 °C, and so on). In one particular example, the active heating system may maintain a temperature of about 45 °C (e.g., 45 °C +/- 2 °C).

The above examples may be implemented separately or together. For example, an imaging device in accordance with the present disclosure may implement the reduced footprint design methodology illustrated in FIGS. 20B and 21A-21C by itself. In another example, an imaging device in accordance with the present disclosure may implement the thermal control methodology illustrated in FIGS. 22-25 by itself. In yet another example, an imaging device in accordance with the present disclosure may implement both the reduced footprint design methodology of FIGS. 20B and 21A-21C and the thermal control methodology illustrated in FIGS. 22-25.

Unless otherwise defined or specified, as used herein with respect to a reference value, the term "substantially" indicates a variation from the reference value of $\pm$ 10% or less, inclusive (e.g., $\pm$ 5%, $\pm$ 2%, $\pm$ 1%, $\pm$ 0.5%). For example, a first component that is positioned substantially equidistant between second and third components is positioned at a distance from the second component that is within 10% inclusive of a distance from the from the third component. Similarly, a substantially constant value deviates (over a relevant operation) from a reference value by 10% or less. In particular, "substantially parallel" indicates a direction that is within $\pm$ 10 degrees of a reference direction (e.g., within $\pm$ 5 degrees or $\pm$ 3 degrees), inclusive. Correspondingly, "substantially perpendicular" indicates a direction that is within $\pm$ 10 degrees of perpendicular a reference direction (e.g., within $\pm$ 5 degrees or $\pm$ 3 degrees), inclusive. Also in particular, "substantially zero diopters" indicates diopters below 0.1 or less, 0.01 or less, or 0.001 or less. and "substantially zero current" indicates current below 0.1 mA or less, 0.01 mA or less, or 0.001 mA or less.

The present disclosure may take any one or more (including combinations) of the following example configurations.

Configuration 1. An imaging device comprising: an image sensor; a rear fixed focus lens group element positioned in front of the image sensor along an optical axis of the imaging device; a first liquid lens positioned in front of the image sensor and the rear fixed focus lens group along the optical axis; a second liquid lens positioned in front of the image sensor and the first liquid lens along the optical axis; an aperture positioned between the first liquid lens and the second liquid lens along the optical axis, the optical axis passing through the first liquid lens and the second liquid lens; and a front fixed focus lens group positioned in front of the image sensor and the second liquid lens along the optical axis, wherein the rear fixed focus lens group or the front fixed focus lens group includes an aspherical lens, wherein a controller restrains the first liquid lens and the second liquid lens to settings where the F# of the imaging device is constant independent of zoom level, or the F# is changed with respect to the zoom level, wherein the controller simultaneously adjusts the zoom level and focus, and wherein the controller adjusts the first liquid lens and the second liquid lens to project a zoom-independent area of a focal plane projected onto the image sensor.

Configuration 2. The imaging device of configuration 1, further comprising an orientation sensor.

Configuration 3. The imaging device of configuration 1 or configuration 2, wherein the aperture is positioned at an aperture distance from the first liquid lens of between 0.1% and 99.9% of the distance between the first liquid lens and the second liquid lens.

Configuration 4. The imaging device of configuration 3, wherein the aperture distance is between 0.1% and 49.9% of the distance between the first liquid lens and the second liquid lens, such as between 5% and 25%, between 1% and 10%, between 1% and 25%, or between 5% and 49%.

Configuration 5. The imaging device of any preceding configuration, wherein a first lens orientation of the first liquid lens and a second lens orientation of the second liquid lens are equal relative to one another.

Configuration 6. The imaging device of any preceding configuration, wherein the aperture is a variable aperture configured to change aperture size.

Configuration 7. The imaging device of any preceding configuration, wherein the image sensor, the rear fixed focus lens group, the first liquid lens, the aperture, the second liquid lens, and the front fixed focus lens group are positioned in listed order along the optical axis.

Configuration 8. The imaging device of any preceding configuration, further comprising the controller, the controller operatively coupled to the first liquid lens and the second liquid lens.

Configuration 9. The imaging device of configuration 8, wherein the controller is adapted to control the first liquid lens and the second liquid lens to require that, in use, at least one of the first liquid lens and the second liquid lens has a convex configuration.

Configuration 10. The imaging device of any preceding configuration, wherein the controller is adapted to acquire images at multiple different working distances between 300 millimeters (mm) and 5000 mm, wherein each of the multiple different working distances are at least 50 mm from one another and at most 5 meters from one another.

Configuration 11. An imaging device comprising: an image sensor; a rear fixed focus lens group positioned in front of the image sensor along an optical axis of the imaging device; a first liquid lens positioned in front of the image sensor along the optical axis, the first liquid lens comprising a first solid portion and a first flexible membrane, the first solid portion and the first flexible membrane defining a first interior space filled by a first liquid; a second liquid lens positioned in front of the image sensor along the optical axis, the second liquid lens comprising a second solid portion and a second flexible membrane, the second solid portion and the second flexible membrane defining a second interior space filled by a second liquid; an aperture positioned between the first liquid lens and the second liquid lens along the optical axis, the optical axis passing through the first liquid lens and the second liquid lens; and a front fixed focus lens group positioned in front of the image sensor along the optical axis; and a controller operatively coupled to the first liquid lens and the second liquid lens, the controller configured to: receive a desired focal distance for an object; retrieve from a database or compute focal length settings for the first liquid lens and the second liquid lens, the focal length settings configured to achieve the desired focal distance; send signals based on the focal length settings to the first liquid lens and the second liquid lens to cause the first liquid lens and the second liquid lens to be at the desired focal distance, wherein the controller restrains the first liquid lens and the second liquid lens to settings where the F# of the imaging device is constant independent of zoom level, or the F# is changed with respect to the zoom level, wherein the controller simultaneously adjusts the zoom level and focus.

Configuration 12. The imaging device of configuration 11, wherein the controller is further configured to: determine that the focal length settings include an arrangement where a first curvature of the first membrane is substantially the same as a second curvature of the second membrane; based on determining that the focal length settings include the arrangement, send the signals to the first liquid lens and the second liquid lens to cause the first liquid lens and the second liquid lens to be at the desired focal distance.

Configuration 13. The imaging device of configuration 11, wherein the controller is further configured to: determine that the focal length settings include an arrangement where a first curvature of the first membrane is different than a second curvature of the second membrane; based on determining that the focal length settings include the arrangement, send the signals to the first liquid lens and the second liquid lens to cause the first liquid lens and the second liquid lens to be at the desired focal distance.

Configuration 14. The imaging device of any one of configurations 11 to 13, further comprising an orientation sensor, wherein a first lens orientation of the first liquid lens or a second lens orientation of the second liquid lens are determined by the orientation sensor.

Configuration 15. The imaging device of any one of configurations 11 to 14, wherein at least two, three, four, or five individual members of a group including the image sensor, the rear fixed focus lens group, the first liquid lens, the aperture, the second liquid lens, and the front fixed focus lens group are positioned in listed order along the optical axis.

Configuration 16. The imaging device of any one of configurations 11 to 15, wherein the image sensor, the rear fixed focus lens group, the first liquid lens, the aperture, the second liquid lens, and the front fixed focus lens group are positioned in listed order along the optical axis.

Configuration 17. An imaging device comprising: an image sensor; a rear fixed focus lens group positioned in front of the image sensor along an optical axis of the imaging device; a first liquid lens positioned in front of the image sensor along the optical axis, the first liquid lens comprising a first solid portion and a first flexible membrane, the first solid portion and the first flexible membrane defining a first interior space filled by a first liquid, the first liquid lens oriented such that the first flexible membrane faces toward the image sensor; a second liquid lens positioned in front of the image sensor along the optical axis, the second liquid lens comprising a second solid portion and a second flexible membrane, the second solid portion and the second flexible membrane defining a second interior space filled by a second liquid, the second liquid lens oriented such that the second flexible membrane faces toward the image sensor; a front fixed focus lens group positioned in front of the image sensor along the optical axis; and a controller operatively coupled to the first liquid lens and the second liquid lens, wherein the image sensor, the rear fixed focus lens group, the first liquid lens, the second liquid lens, and the front fixed focus lens group are positioned in listed order along the optical axis, wherein the image sensor includes an indicia that indicates a preferred operating orientation, and wherein the first flexible membrane has a first inflection point positioned further away from the imaging sensor relative to a first neutral position of the first flexible membrane and the second flexible membrane has a second inflection point positioned further away from the imaging sensor relative to a second neutral position of the second flexible membrane when the imaging device is positioned in the preferred operating orientation, wherein the controller restrains the first liquid lens and the second liquid lens to settings where the F# of the imaging device is constant independent of zoom level, or the F# is changed with respect to the zoom level, wherein the controller simultaneously adjusts the zoom level and focus, and wherein the controller adjusts the first liquid lens and the second liquid lens to project a zoom-independent area of a focal plane projected onto the image sensor.

Configuration 18. An imaging device comprising: an image sensor; a rear fixed focus lens group positioned in front of the image sensor along an optical axis of the imaging device; a first liquid lens positioned in front of the image sensor along the optical axis; a second liquid lens positioned in front of the image sensor along the optical axis; a front fixed focus lens group positioned in front of the image sensor along the optical axis; and a controller operatively coupled to the first liquid lens and the second liquid lens, wherein the controller is configured to: receive a distance between an object and the imaging device; determine a desired focal distance based on the distance between the object and the imaging device; retrieve from a database or compute focal length settings for the first liquid lens and the second liquid lens, the focal length settings confirmed to achieve the desired focal distance; and send signals based on the focal length settings to the first liquid lens and the second liquid lens to cause the first liquid lens and the second liquid lens to be at the desired focal distance, wherein the controller restrains the first liquid lens and the second liquid lens to settings where the F# of the imaging device is constant independent of zoom level, or the F# is changed with respect to the zoom level, wherein the controller simultaneously adjusts the zoom level and focus.

Configuration 19. The imaging device of configuration 18, wherein the controller is further configured to: acquire, using the image sensor, an image of the object including a symbol candidate; and based on failing to decode the symbol candidate, adjusting at least one of the focal length of the first liquid lens or the focal length of the second liquid lens.

Configuration 20. The imaging device of configuration 19, wherein the controller is further configured to adjust only the focal length of the first liquid lens, based on failing to decode the symbol candidate.

Configuration 21. The imaging device of configuration 20, wherein the image is a first image, and wherein the controller is further configured to: in response to adjusting only the focal length of the first liquid lens, acquire, using the image sensor, a second image including the symbol candidate; based on failing to decode the symbol candidate from the second image, adjusting the focal length of only the second liquid lens.

Configuration 22. The imaging device of any one of configurations 18 to 21, wherein the controller is further configured to: determine if any one of the focal length settings includes the current focal length settings for the first liquid lens or the second liquid lens; in response to one of the focal length settings including the current focal length setting for the first liquid lens, send a signal to the second liquid lens to adopt the one of the focal length settings including the current focal length setting for the first liquid lens; in response to one of the focal length settings including the current focal length setting for the second liquid lens, send a signal to the first liquid lens to adopt the one of the focal length settings including the current focal length setting for the second liquid lens; and in response to determining that none of the focal length settings include the current focal length settings for the first liquid lens or the second liquid lens, send signals to the first liquid lens and the second liquid lens to adopt one of the focal length settings that does not include the current focal length settings for the first liquid lens and the second liquid lens.

Configuration 23. The imaging device of any one of configurations 18 to 22, wherein the image sensor, the rear fixed focus lens group, the first liquid lens, the second liquid lens, and the front fixed focus lens group are positioned in order along the optical axis,

Configuration 24. An imaging device comprising: an image sensor; a rear fixed focus lens group positioned in front of the image sensor along an optical axis; a first liquid lens positioned in front of the image sensor along the optical axis; a second liquid lens positioned in front of the image sensor along the optical axis; a front fixed focus lens group positioned in front of the image sensor along the optical axis; and a controller operatively coupled to the first liquid lens and the second liquid lens, wherein the image sensor, the rear fixed focus lens group, the first liquid lens, the second liquid lens, and the front fixed focus lens group are positioned in order along the optical axis.

Configuration 25. The imaging device of any preceding configuration, wherein the controller is further configured to: cause the first liquid lens to be at a first focal length that has an optical power of substantially 0 diopters; and with the first liquid lens at the first focal length, calibrate the imaging device.

Configuration 26. The imaging device of any preceding configuration, wherein the controller is further configured to: cause the second liquid lens to be at a second focal length that has an optical power of substantially 0 diopters; and with the first liquid lens at the first focal length and the second liquid lens at the second focal length, calibrate the imaging device.

Configuration 27. The imaging device of any preceding configuration, wherein the controller is programmed with settings for the first liquid lens and the second liquid lens for a series of predetermined discrete focal distances.

Configuration 28. The imaging device of any preceding configuration, wherein the imaging device has a focal distance of between 10 mm and 18 mm when the first liquid lens and the second liquid lens are both set to zero diopter settings.

Configuration 29. The imaging device of any preceding configuration, the imaging device further comprising an optical filter positioned in front of the image sensor and at least one of between the first liquid lens and the second liquid lens, or between a first group of lenses and a second group of lenses that are each positioned in front of the first liquid lens and the second liquid lens.

Configuration 30. The imaging device of any preceding configuration, wherein the controller is operatively coupled to the aperture that is a variable aperture, wherein the controller is configured to adjust the first liquid lens, the second liquid lens, and the variable aperture to provide a constant F# or an F# that is changed with respect to the zoom level.

Configuration 31. The imaging device of any preceding configuration, wherein the simultaneous adjustment of the zoom level and focus occurs within 15 - 25 milliseconds, inclusive.

Configuration 32. The imaging device of any one of configurations 1-30, wherein the simultaneous adjustment of the zoom level and focus occurs in 15 milliseconds or less.

Configuration 33. A sorting system comprising: the imaging device of any one of the preceding configurations; a conveyor; and a distance sensor sensing upstream of the imaging device and configured to measure a height of an object on the conveyor.

Configuration 34. An imaging device comprising: an image sensor; a plurality of lenses disposed within a housing and positioned along an optical axis of the imaging device, including: a rear fixed focus lens group positioned in front of the image sensor; a first liquid lens having a first lens diameter and positioned in front of the image sensor and the rear fixed focus lens group, wherein the first liquid lens provides a clear aperture of the imaging device; a second liquid lens having a second lens diameter and positioned in front of the first liquid lens; and a front fixed focus lens group positioned in front of the second liquid lens, wherein the first liquid lens and the second liquid lens are positioned such that a ray bundle diameter with which a ray bundle is incident on at least one of the first liquid lens or the second liquid lens is less than the respective lens diameter.

Configuration 35. The imaging device of configuration 34, wherein the first liquid lens and the second liquid lens are positioned such that the ray bundle diameter incident on the first liquid lens is less than the first lens diameter and the ray bundle diameter incident on the second liquid lens is less than the second lens diameter.

Configuration 36. The imaging device of configuration 34 or configuration 35, wherein the second liquid lens provides a second clear aperture of the imaging device.

Configuration 37. The imaging device of any one of configurations 34 to 36, wherein the ray bundle diameter is less than or equal to 3 millimeters.

Configuration 38. The imaging device of any one of configurations 34 to 37, wherein the ray bundle diameter is 50% or less of the respective lens diameter.

Configuration 39. The imaging device of any one of configurations 34 to 38, further comprising a temperature sensor disposed within the housing and in proximity to at least one of the first liquid lens or the second liquid lens.

Configuration 40. The imaging device of configuration 39, wherein the temperature sensor is disposed within the first liquid lens or the second liquid lens.

Configuration 41. The imaging device of configuration 39 or configuration 40, further comprising an active heating element disposed within the housing and in proximity to at least one of the first liquid lens or the second liquid lens, wherein the active heating element is configured to apply heat to both the first liquid lens and the second liquid lens.

Configuration 42. The imaging device of configuration 41, wherein the active heating element comprises a first active heating element disposed within the first liquid lens, and a second active heating element disposed within the second liquid lens.

Configuration 43. The imaging device of configuration 41, wherein the active heating element comprises a thermal pad in contact with the at least one of the first liquid lens or the second liquid lens.

Configuration 44. The imaging device of any one of configurations 41 to 43, further comprising a controller in communication with the temperature sensor and the active heating element, the controller configured to: receive a temperature measurement from the temperature sensor; and based on the temperature measurement, generate a control signal to modify an operation of the active heating element.

Configuration 45. The imaging device of configuration 44, wherein the control signal is an electrical current applied to the active heating element.

Configuration 46. The imaging device of configuration 44 or configuration 45, wherein the controller is further configured to generate the control signal to maintain a minimum predetermined temperature, based on the temperature measurement.

Configuration 47. The imaging device of configuration 46, wherein the minimum predetermined temperature corresponds to a target response time of the first liquid lens and the second liquid lens.

Configuration 48. The imaging device of configuration 46 or configuration 47, wherein the minimum predetermined temperature is 40 degrees Celsius.

Configuration 49. The imaging device of any one of configurations 34 to 48, further comprising a controller in communication with the first liquid lens and the second liquid lens, wherein the controller is configured to: control focal length settings for the first liquid lens and the second liquid lens; restrain the first liquid and the second liquid lens to focal length settings such that the F# of the imaging device is constant independent of a zoom level, or the F# is changed with respect to the zoom level; and simultaneously adjust the zoom level and focus.

Configuration 50. A lens assembly for an imaging device, the lens assembly comprising: a lens housing configured to engage with the imaging device; a plurality of lenses disposed within the lens housing and positioned along an optical axis, including: a rear fixed focus lens group positioned in front of the image sensor; a first liquid lens having a first lens diameter and positioned in front of the image sensor and the rear fixed focus lens group, wherein the first liquid lens provides a clear aperture of the imaging device; a second liquid lens having a second lens diameter and positioned in front of the first liquid lens; and a front fixed focus lens group positioned in front of the second liquid lens, wherein the first liquid lens and the second liquid lens are positioned such that a ray bundle diameter which is incident on the first liquid lens and the second liquid lens is less than the first lens diameter and the second lens diameter, respectively.

Configuration 51. The lens assembly of configuration 50, wherein the ray bundle diameter is 50% or less of the respective lens diameter.

Configuration 52. The lens assembly of configuration 50 or configuration 51, further comprising a temperature sensor disposed within the lens housing, wherein the temperature sensor is configured to detect a temperature of at least one of the first liquid lens or the second liquid lens.

Configuration 53. The lens assembly of any one of configurations 50 to 52, further comprising an active heating element disposed within the lens housing, wherein the active heating element is configured to apply heat to both the first liquid lens and the second liquid lens.

The particular aspects disclosed above are illustrative only, as the technology may be modified and practiced in different but equivalent manners apparent to those skilled in the art having the benefit of the teachings herein. Furthermore, no limitations are intended to the details of construction or design herein shown, other than as described in the claims below. It is therefore evident that the particular aspects disclosed above may be altered or modified and all such variations are considered within the scope and spirit of the technology. Accordingly, the protection sought herein is as set forth in the claims below.

## Claims

1. An imaging device (900) comprising:

   an image sensor (902);
   a plurality of lenses disposed within a housing (922) and positioned along an optical axis of the imaging device (900), including:

   a rear fixed focus lens group (904) positioned in front of the image sensor (902);
   a first liquid lens (906) having a first lens diameter and positioned in front of the image sensor (902) and the rear fixed focus lens group (904), wherein the first liquid lens provides a clear aperture of the imaging device (900);
   a second liquid lens (908) having a second lens diameter and positioned in front of the first liquid lens (906); and
   a front fixed focus lens group (910) positioned in front of the second liquid lens (908),

wherein the first liquid lens (906) and the second liquid lens (908) are positioned such that a ray bundle diameter (804) with which a ray bundle is incident on at least one of the first liquid lens or the second liquid lens is less than the respective lens diameter.

2. The imaging device of claim 1, wherein the first liquid lens (906) and the second liquid lens (908) are positioned such that the ray bundle diameter incident on the first liquid lens is less than the first lens diameter and the ray bundle diameter incident on the second liquid lens is less than the second lens diameter.

3. The imaging device of claim 1 or claim 2, wherein the second liquid lens (908) provides a second clear aperture of the imaging device (900).

4. The imaging device of any one of claims 1 to 3, wherein the ray bundle diameter is 50% or less of the respective lens diameter.

5. The imaging device of any one of claims 1 to 4, further comprising a temperature sensor (916) disposed within the housing (922) and in proximity to at least one of the first liquid lens (906) or the second liquid lens (908).

6. The imaging device of claim 5, wherein the temperature sensor (916) is disposed within the first liquid lens (906) or the second liquid lens (908).

7. The imaging device of claim 5 or claim 6, further comprising an active heating element (918) disposed within the housing (922) and in proximity to at least one of the first liquid lens (906) or the second liquid lens (908), wherein the active heating element (918) is configured to apply heat to both the first liquid lens (906) and the second liquid lens (908).

8. The imaging device of claim 7, wherein the active heating element (918) comprises:
a first active heating element disposed within the first liquid lens (906), and a second active heating element disposed within the second liquid lens (908), or a thermal pad in contact with the at least one of the first liquid lens (906) or the second liquid lens (908).

9. The imaging device of claim 7 or claim 8, further comprising a controller (920) in communication with the temperature sensor (916) and the active heating element (918), the controller (920) configured to:

receive a temperature measurement from the temperature sensor (916); and
based on the temperature measurement, generate a control signal to modify an operation of the active heating element (918).

10. The imaging device of claim 9, wherein the controller (920) is further configured to generate the control signal to maintain a minimum predetermined temperature, based on the temperature measurement, optionally wherein the minimum predetermined temperature corresponds to a target response time of the first liquid lens (906) and the second liquid lens (908).

11. The imaging device of any one of claims 1 to 10, further comprising a controller (920) in communication with the first liquid lens (906) and the second liquid lens (908), wherein the controller (920) is configured to:

control focal length settings for the first liquid lens (906) and the second liquid lens (908);
restrain the first liquid lens (906) and the second liquid lens (908) to focal length settings such that the F# of the imaging device (900) is constant independent of a zoom level, or the F# is changed with respect to the zoom level; and
simultaneously adjust the zoom level and focus.

12. A lens assembly for an imaging device (900), the lens assembly comprising:

a lens housing (922) configured to engage with the imaging device (900);
a plurality of lenses disposed within the lens housing (922) and positioned along an optical axis, including:

a rear fixed focus lens group (904) positioned in front of an image sensor (902) of the imaging device (900);
a first liquid lens (906) having a first lens diameter and positioned in front of the image sensor (902) and the rear fixed focus lens group (904), wherein the first liquid lens (902) provides a clear aperture of the imaging device (900);

a second liquid lens (908) having a second lens diameter and positioned in front of the first liquid lens (906); and

a front fixed focus lens group (910) positioned in front of the second liquid lens (908),

wherein the first liquid lens (906) and the second liquid lens (908) are positioned such that a ray bundle diameter (804) which is incident on the first liquid lens (906) and the second liquid lens (908) is less than the first lens diameter and the second lens diameter, respectively.

13. The lens assembly of claim 12, wherein the ray bundle diameter is 50% or less of the respective lens diameter.

14. The lens assembly of claim 12 or claim 13, further comprising a temperature sensor (916) disposed within the lens housing (922), wherein the temperature sensor (916) is configured to detect a temperature of at least one of the first liquid lens (906) or the second liquid lens (908).

15. The lens assembly of any one of claims 12 to 14, further comprising an active heating element (918) disposed within the lens housing (922), wherein the active heating element (918) is configured to apply heat to both the first liquid lens (906) and the second liquid lens (908).

FIG. 1

FIG. 2

FIG. 3

START

— 200

SHORT ? — RECEIVE INPUT — LONG ?

202

204

RETRIEVE PREDEFINED SHORT FIRST FOCAL LENGTH AND PREDEFINED SHORT SECOND FOCAL LENGTH

208

RETRIEVE PREDEFINED LONG FIRST FOCAL LENGTH AND PREDEFINED LONG SECOND FOCAL LENGTH

206

SET PREDEFINED SHORT FIRST FOCAL LENGTH AND PREDEFINED SHORT SECOND FOCAL LENGTH

210

SET PREDEFINED LONG FIRST FOCAL LENGTH AND PREDEFINED LONG SECOND FOCAL LENGTH

ACQUIRE IMAGE

ANALYZE IMAGE

FINE TUNE FOCAL LENGTHS

ACQUIRE FINE-TUNED IMAGE

DECODE CODE

212

214

216

218

220

END

FIG. 4

FIG. 5

400

START

402 — MOUNT IMAGE
SENSOR

403 — DETERMINE
DISTANCES

404 — POSITION FIXED
FOCUS LENS

406 — POSITION FIRST
VARIABLE FOCUS LENS

408 — POSITION SECOND
VARIABLE FOCUS LENS

409 — DETERMINE PREDETERMINED
FOCAL LENGTHS

410 — PROGRAM MEMORY
WITH PREDETERMINED
FOCAL LENGTHS

END

FIG. 6

FIG. 7

EP 4 686 964 A1

FIG. 8

FIG. 9

FIG. 10

EP 4 686 964 A1

FIG. 11

FIG. 12

EP 4 686 964 A1

570

TARGET ON DIFFERENT
POSITIONS OF THE FOV

570

100%                                90%

572

100%                                80%

FIG. 13

FIG. 14B

FIG. 14A

47

FIG. 15

650 ⟍

652 — CAUSE A FIRST VARIABLE FOCUS LENS OF AN IMAGING DEVICE TO HAVE AN OPTICAL POWER OF SUBSTANTIALLY ZERO DIOPTERS

652 — CAUSE A SECOND VARIABLE FOCUS LENS OF THE IMAGING DEVICE TO HAVE AN OPTICAL POWER OF SUBSTANTIALLY ZERO DIOPTERS

652 — DETERMINE A CALIBRATION POINT

652 — MOVE AN OBJECT TO A KNOWN DISTANCE AWAY FROM THE IMAGING DEVICE

652 — DETERMINE A FIRST FOCAL LENGTH OF THE FIRST VARIABLE FOCUS LENS AND A SECOND FOCAL LENGTH OF THE SECOND VARIABLE FOCUS LENS

652 — ACQUIRE AN IMAGE USING THE IMAGING DEVICE

652 — ASSOCIATE THE FIRST FOCAL LENGTH AND THE SECOND FOCAL LENGTH WITH THE KNOWN DISTANCE

652 — CREATE (OR ADJUST) THE CALIBRATION CURVE

FIG. 16

DISTANCE FROM TARGET

OPTICAL POWER

FIG. 17

700

702 — DETERMINE A DISTANCE BETWEEN AN OBJECT AND AN IMAGING DEVICE

704 — DETERMINE A FIRST FOCAL LENGTH AND A SECOND FOCAL LENGTH

706 — CAUSE THE FIRST VARIABLE FOCUS LENS TO BE AT THE FIRST FOCAL LENGTH AND THE SECOND VARIABLE FOCUS LENS TO BE AT THE SECOND FOCAL LENGTH

708 — ACQUIRE AN IMAGE OF A SYMBOL OF THE OBJECT

710 — DECODABLE ? — NO

YES

712 — EXTRACT THE SYMBOL INFORMATION FROM THE SYMBOL

FIG. 18

FIG. 19

FIG. 20A

800

804

Footprint ~ 2,0mm

802

806

13mil barcode

10milbarcode

FIG. 20B

FIG. 21A

FIG. 21B

916

FIG. 21C

FIG. 22

FIG. 23

FIG. 24

0mA to 200mA Step Response Time Versus Sample Temperature
(No Overdrive)

FIG. 25

Europäisches
Patentamt

European
Patent Office

Office européen
des brevets

# EUROPEAN SEARCH REPORT

**Application Number**

EP 25 19 2922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE BIOSIS [Online] BIOSCIENCES INFORMATION SERVICE, PHILADELPHIA, PA, US; July 2021 (2021-07), CHENG YANG ET AL: "Optical zoom imaging systems using adaptive liquid lenses", XP093343779, Database accession no. PREV202100663599 | 1-4, 11-13 | INV. G02B3/14 G02B7/08 G02B13/00 G02B15/04 |
| Y | * abstract; figures 3b,12 * | 5-10,14, 15 | |
| | & BIOINSPIRATION & BIOMIMETICS, vol. 16, no. 4, July 2021 (2021-07), page Article No.: 041002, ISSN: 1748-3182(print), DOI: 10.1088/1748-3190/ABFC2B ----- | | |
| X | ZHAO PENGPENG ET AL: "A miniaturized camera objective with 2X optical zoom", PROCEEDINGS OF SPIE; [PROCEEDINGS OF SPIE ISSN 0277-786X VOLUME 10524], SPIE, US, vol. 10545, 22 February 2018 (2018-02-22), pages 1054508-1054508, XP060105682, DOI: 10.1117/12.2289742 ISBN: 978-1-5106-1533-5 | 1-4, 11-13 | TECHNICAL FIELDS SEARCHED (IPC) G02B |
| Y | * figure 1a * ----- | 5-10,14, 15 | |
| X | CN 101 825 762 A (ANDREAS OBREBSKI) 8 September 2010 (2010-09-08) | 1-4, 11-13 | |
| Y | * figure 3 * ----- | 5-10,14, 15 | |
| X | US 2005/199720 A1 (BARKAN EDWARD [US]) 15 September 2005 (2005-09-15) | 1-4, 11-13 | |
| Y | * figure 9 * ----- -/-- | 5-10,14, 15 | |

The present search report has been drawn up for all claims

| Place of search | Date of completion of the search | Examiner |
|---|---|---|
| Munich | 11 December 2025 | Daffner, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 19 2922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 328361 A (OLYMPUS OPTICAL CO) 15 November 2002 (2002-11-15) | 1-4, 11-13 | |
| Y | * figure 2 * | 5-10,14, 15 | |
| Y | JP 2016 095353 A (MORITEX CORP) 26 May 2016 (2016-05-26) * paragraphs [0024] - [0032], [0042] - [0047], [0061] - [0064] * | 5-10,14, 15 | |

TECHNICAL FIELDS
SEARCHED        (IPC)

The present search report has been drawn up for all claims

| Place of search | Date of completion of the search | Examiner |
|---|---|---|
| Munich | 11 December 2025 | Daffner, Michael |

EPO FORM 1503 03.82 (P04C01)

## ANNEX TO THE EUROPEAN SEARCH REPORT
## ON EUROPEAN PATENT APPLICATION NO.

EP 25 19 2922

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2025

| Patent document cited in search report | | Publication date | Patent family member(s) | | Publication date |
|---|---|---|---|---|---|
| CN 101825762 | A | 08-09-2010 | CN | 101825762 A | 08-09-2010 |
| | | | CN | 102141640 A | 03-08-2011 |
| | | | US | 2006256429 A1 | 16-11-2006 |
| | | | US | 2009021843 A1 | 22-01-2009 |
| | | | US | 2011063736 A1 | 17-03-2011 |
| | | | WO | 2005040866 A2 | 06-05-2005 |
| US 2005199720 | A1 | 15-09-2005 | CN | 101019129 A | 15-08-2007 |
| | | | EP | 1763819 A2 | 21-03-2007 |
| | | | JP | 4514793 B2 | 28-07-2010 |
| | | | JP | 2007538338 A | 27-12-2007 |
| | | | US | 2005199720 A1 | 15-09-2005 |
| | | | WO | 2005116908 A2 | 08-12-2005 |
| JP 2002328361 | A | 15-11-2002 | NONE | | |
| JP 2016095353 | A | 26-05-2016 | JP | 6223952 B2 | 01-11-2017 |
| | | | JP | 2016095353 A | 26-05-2016 |

EPO FORM P0459

For more details about this annex : see Official Journal of the European Patent Office, No. 12/82

**EP 4 686 964 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 42431624
- US 63441525